# EUROPEAN PATENT APPLICATION

(11) **EP 4 181 365 A1**
(43) Date of publication of application: **17.05.2023**
(21) Application number: 21837998.0
(22) Date of filing: 06.07.2021
(51) Int. Cl.: H02K 15/02

(54) **METHOD FOR MANUFACTURING ADHERED LAMINATE CORE AND ADHERED LAMINATE CORE MANUFACTURING DEVICE**

(30) Priority: 07.07.2020 JP 2020117265
(71) Applicant: NIPPON STEEL CORPORATION, Chiyoda-ku Tokyo 100-8071 (JP); Toagosei Co., Ltd., Minato-ku Tokyo 105-8419 (JP)
(72) Inventor: TAKEDA, Kazutoshi, Tokyo 100-8071 (JP); TAKATANI, Shinsuke, Tokyo 100-8071 (JP); HIRAYAMA, Ryu, Tokyo 100-8071 (JP); IWASE, Yoshiaki, Nagoya-shi, Aichi 455-0026 (JP); NIWA, Makoto, Nagoya-shi, Aichi 455-0026 (JP); YAMADA, Masashi, Nagoya-shi, Aichi 455-0026 (JP)
(74) Representative: Vossius & Partner Patentanwälte Rechtsanwälte mbB
(86) International application number: PCT/JP2021/025452
(87) International publication number: WO 2022/009878

(57) **Abstract**

This adhesively-laminated core manufacturing method is a method for manufacturing an adhesively-laminated core by punching a plurality of steel sheet parts while a strip-shaped steel sheet is fed and laminating the steel sheet parts via an adhesive, and includes a step of forming a curing acceleration portion by applying and drying a curing accelerator on one or both surfaces of the strip-shaped steel sheet before a pressing oil is applied, and a step of applying the pressing oil to a surface of the curing acceleration portion.

## Description

### [Technical Field]

The present invention relates to an adhesively-laminated core manufacturing method and an adhesively-laminated core manufacturing device.

Priority is claimed on Japanese Patent Application No. 2020-117265 filed on July 7, 2020, the content of which is incorporated herein by reference.

### [Background Art]

A rotary electric machine used as, for example, a motor has a laminated core. This laminated core is manufactured by punching a predetermined shape separately a plurality of times while intermittently feeding a strip-shaped steel sheet, and laminating a plurality of obtained steel sheet parts. Fixing between the steel sheet parts is performed by welding, adhesion, caulking, or the like, but, among these, a fixing method by adhesion has attracted attention from the perspective of effectively suppressing iron loss of the laminated core.

For example, Patent Document 1 below discloses a manufacturing method of a thin metal sheet laminate which is a method for manufacturing a thin metal sheet laminate by subjecting a hoop material coated with a pressing oil on one or both surfaces to a plurality of press processes in sequence, obtaining a thin metal sheet by applying an adhesive to one surface of the hoop material and then performing outer shape punching thereon, and adhesively-laminating a predetermined number of the thin metal sheets, in which a curing accelerator is added to the pressing oil.

According to this manufacturing method of a thin metal sheet laminate, since a curing accelerator is added to the pressing oil, adhesion between the thin metal sheets is performed quickly and firmly without removing the pressing oil, simplification in manufacturing steps and reduction in size of dies in a progressive die apparatus are made possible, and thereby it is explained that improvement in product quality and productivity, and reduction in size of the manufacturing apparatus are realized.

Also, Patent Document 2 below discloses a punching and lamination pressing method, in which a steel sheet part having a predetermined shape is punched out of an intermittently fed strip-shaped steel sheet and the steel sheet part is laminated, including a first application step of applying one of an adhesive or a curing accelerator for promoting curing of the adhesive to a lower surface of the strip-shaped steel sheet at an upstream side of a press processing position at which the steel sheet part is punched out of the strip-shaped steel sheet, and a second application step of applying the other of the adhesive and the curing accelerator to an upper surface of the strip-shaped steel sheet at the press processing position.

According to this punching and lamination pressing method, it is explained that a curing time of the adhesive can be greatly reduced by performing the first application step and the second application step, and productivity of cores manufactured by laminating a plurality of steel sheet parts can be increased.

### [Citation List]

### [Patent Document]

[Patent Document 1]
   Japanese Patent No. 4648765
[Patent Document 2]
   Japanese Patent No. 6164029

### [Summary of the Invention]

### [Problems to be Solved by the Invention]

According to the manufacturing method of a thin metal sheet laminate of Patent Document 1, adhesion between thin metal sheets can be performed quickly by using a curing accelerator. Since the curing accelerator is applied in a diluted state due to addition of the pressing oil, an amount of the curing accelerator needs to be increased to a considerable amount if a better curing acceleration effect is desired. However, in this case, since a proportion of the pressing oil is reduced, there is a concern that this may affect punching workability when a thin metal sheet is punched.

Also, according to the punching and lamination pressing method of Patent Document 2, a curing time of the adhesive can be greatly reduced. However, even here, an influence of a pressing oil, which is essential for punching processing, on a curing accelerator has not been studied at all.

As described above, in order to further increase productivity of the adhesively-laminated core, a lubricating function of the pressing oil at the time of punching a steel sheet, and a curing accelerating function of the adhesive due to use of the curing accelerator at the time of adhering the steel sheet need to be exhibited at a higher level. However, conventionally, sufficient examination on an application form of the curing accelerator has not been made.

The present invention has been made in view of the above circumstances, and an object of the present invention is to provide an adhesively-laminated core manufacturing method and an adhesively-laminated core manufacturing device in which higher productivity can be obtained while securing a sufficient adhesive strength in manufacturing an adhesively-laminated core.

### [Means for Solving the Problem]

In order to solve the above-described problems, the present invention employs the following means.
(1) An adhesively-laminated core manufacturing method according to one aspect of the present invention is a method for manufacturing an adhesively-laminated core by punching a plurality of steel sheet parts while a strip-shaped steel sheet is fed and laminating the steel sheet parts via an adhesive, and includes a step of forming a curing acceleration portion by applying and drying a curing accelerator on one or both surfaces of the strip-shaped steel sheet before a pressing oil is applied, and a step of applying the pressing oil to a surface of the curing acceleration portion.

According to the adhesively-laminated core manufacturing method of the above-described (1), since the curing acceleration portion provided on the strip-shaped steel sheet has been dried and cured in advance, mixing with the pressing oil applied in the subsequent step is curbed. Therefore, when the electrical steel sheets are laminated and adhered together, since the curing acceleration portion can be mixed with the adhesive while maintaining a high concentration, a high adhesive strength can be exhibited in an early stage. Therefore, higher productivity can be obtained while securing a sufficient adhesive strength.

Furthermore, since a surface of the curing acceleration portion is coated with the pressing oil, the curing acceleration portion adhering to the die can be curbed during press processing to be performed thereafter. If the surface of the curing acceleration portion is fed as it is without being coated with the pressing oil and subjected to the press processing, there is a likelihood that the curing acceleration portion in an exposed state will peel off during punching and will be adhered and deposited on a specific portion of the die (for example, die on a side below a progressive die). If such a deposited material is generated, there is a likelihood that the deposited material will peel off and adhere to each steel sheet part again during continuous pressing, and the deposited material will be sandwiched between laminated steel sheet parts. In that case, there is a likelihood that a shape of the adhesively-laminated core will be distorted, and a structural strength and magnetic characteristics of the adhesively-laminated core will be adversely affected. On the other hand, in the above-described aspect, since the curing acceleration portion is coated with the pressing oil in advance to be protected, and the press processing is performed thereafter, occurrence of the above-described problem is suppressed.

(2) In the adhesively-laminated core manufacturing method according to the above-described (1), each of the steel sheet parts may include a first steel sheet part and a second steel sheet part, and the adhesively-laminated core manufacturing method may include a first step of preparing the first steel sheet part having a first surface, the curing acceleration portion formed on the first surface, and the pressing oil disposed on the surface of the curing acceleration portion, a second step of preparing the second steel sheet part having a second surface and the adhesive disposed on the second surface, and a third step of overlapping and adhering the first steel sheet part and the second steel sheet part so that the first surface and the second surface face each other.

According to the adhesively-laminated core manufacturing method of the above-described (2), the curing acceleration portion has been dried and cured in advance and is in a state in which mixing with the pressing oil is curbed in the first step. Therefore, when the first steel sheet part and the second steel sheet part are overlapped and adhered in the third step, the curing acceleration portion can be mixed with the adhesive while maintaining a high concentration.

(3) In the adhesively-laminated core manufacturing method according to the above-described (1), each of the steel sheet parts may include a first steel sheet part and a second steel sheet part, and the adhesively-laminated core manufacturing method may include a fourth step of preparing the first steel sheet part having a first surface, the curing acceleration portion formed on the first surface, the pressing oil disposed on the surface of the curing acceleration portion, and the adhesive disposed on the pressing oil, a fifth step of preparing the second steel sheet part having a second surface, and a sixth step of overlapping and adhering the first steel sheet part and the second steel sheet part so that the first surface and the second surface face each other.

According to the adhesively-laminated core manufacturing method of the above-described (3), the curing acceleration portion has been dried and cured in advance and is in a state in which mixing with the pressing oil is curbed in the fourth step. Therefore, when the first steel sheet part and the second steel sheet part are overlapped and adhered in the sixth step, the curing acceleration portion can be mixed with the adhesive while maintaining a high concentration.

(4) In the adhesively-laminated core manufacturing method according to the above-described (1), each of the steel sheet parts may include a first steel sheet part and a second steel sheet part, and the adhesively-laminated core manufacturing method may include a seventh step of preparing the first steel sheet part having a first surface, the curing acceleration portion formed on the first surface, the pressing oil disposed on the surface of the curing acceleration portion, and the adhesive disposed on the pressing oil, an eighth step of preparing the second steel sheet part having a second surface and the adhesive disposed on the second surface, and a ninth step of overlapping and adhering the first steel sheet part and the second steel sheet part so that the first surface and the second surface face each other.

According to the adhesively-laminated core manufacturing method of the above-described (4), the curing acceleration portion has been dried and cured in advance and is in a state in which mixing with the pressing oil is curbed in the seventh step. Therefore, when the first steel sheet part and the second steel sheet part are overlapped and adhered in the ninth step, the curing acceleration portion can be mixed with the adhesive while maintaining a high concentration.

(5) In the adhesively-laminated core manufacturing method according to any one of the above-described (1) to (4), the adhesive may be an anaerobic adhesive or a 2-cyanoacrylate-based adhesive.

According to the adhesively-laminated core manufacturing method of the above-described (5), advantages can be obtained in that an amount of the curing accelerator can be relatively increased without affecting workability, a curing time can be reduced, and an adhesive strength can be improved.

(6) In the adhesively-laminated core manufacturing method according to the above-described (5), a curing accelerator for the anaerobic adhesive may contain an active component promoting anaerobic curing selected from titanium, chromium, manganese, iron, cobalt, nickel, copper, zinc, silver, vanadium, molybdenum, ruthenium, saccharin, and a combination thereof.

An active component promoting anaerobic curing is selected from titanium, chromium, manganese, iron, cobalt, nickel, copper, zinc, silver, vanadium, molybdenum, ruthenium, saccharin, and a combination thereof. Preferably, it is selected from copper, iron, vanadium, cobalt, chromium, silver, and manganese, and a combination thereof. Desirably, it is copper, iron, vanadium, cobalt, or chromium, or a combination thereof. Desirably, it is provided in a form of a metal oxide or salt. One or a combination of two or more selected from vanadium acetylacetonate, vanadyl acetylacetonate, vanadyl stearate, vanadium propoxide, vanadium butoxide, vanadium pentoxide, cobalt naphthenate, manganese naphthenate, copper hexanoate, bis(2-ethylhexanoate)copper( II), and the like are preferable examples.

According to the adhesively-laminated core manufacturing method of the above-described (6), since the anaerobic adhesive is cured quickly and completely, advantages can be obtained in that it is extremely excellent particularly in manufacturing that requires a short manufacturing time, suppression of outgassing, or the like, and productivity can be improved.

(7) In the adhesively-laminated core manufacturing method according to the above-described (5), a curing accelerator for the 2-cyanoacrylate-based adhesive may contain an active component promoting curing of the 2-cyanoacrylate-based adhesive selected from organic amines such as dimethylaniline, diethylamine, o-phenylenediamine, dimethylparatoluidine, diethylparatoluidine, and N,N-diethylaniline, acid amides such as trichloroacetamide, organic imides such as succinimide, quaternary ammonium salts such as tetramethylammonium chloride and benzyltrimethylammonium chloride, and a combination thereof.

Specific examples of the active component that promotes curing of the 2-cyanoacrylate-based adhesive are those selected from organic amines such as dimethylaniline, diethylamine, o-phenylenediamine, dimethylparatoluidine, diethylparatoluidine, and N,N-diethylaniline, acid amides such as trichloroacetamide, organic imides such as succinimide, quaternary ammonium salts such as tetramethylammonium chloride and benzyltrimethylammonium chloride, and a combination thereof. One or a combination of two or more selected from organic amines such as dimethylaniline, diethylamine, o-phenylenediamine, dimethylparatoluidine, diethylparatoluidine, and N,N-diethylaniline are preferable examples.

According to the adhesively-laminated core manufacturing method of the above-described (7), since the 2-cyanoacrylate-based adhesive is cured quickly and completely, advantages can be obtained in that it is extremely excellent particularly in manufacturing that requires a short manufacturing time, suppression of outgassing, or the like, and productivity can be improved.

(8) In the adhesively-laminated core manufacturing method according to the above-described (5), a curing accelerator for the anaerobic adhesive or the 2-cyanoacrylate-based adhesive may contain an active component promoting anaerobic curing or an active component promoting curing of the 2-cyanoacrylate-based adhesive diluted with a solvent such as a ketone-based solvent, an alcohol-based solvent, an ester-based solvent, a glycol ether-based solvent, a hydrocarbon-based solvent, a halogenated hydrocarbon-based solvent, an ether-based solvent, a glycol-based solvent, or an amine-based solvent.

As a solvent species, one or a combination of two or more selected from the above-described solvent species is selected. From the perspective of manufacturing the adhesively-laminated core, one or a combination of two or more selected from ethyl acetate, acetone, ethanol, methanol, butanol, toluene, and heptane are preferable examples.

(9) In the adhesively-laminated core manufacturing method according to any one of the above-described (1) to (8), the adhesively-laminated core may be a stator for a rotary electric machine.

According to the adhesively-laminated core manufacturing method of the above-described (9), since higher productivity can be obtained while securing a sufficient adhesive strength, it is possible to manufacture a stator for a rotary electric machine having high performance with a low manufacturing cost.

(10) An adhesively-laminated core manufacturing device according to one aspect of the present invention is a device for manufacturing an adhesively-laminated core by laminating a plurality of steel sheet parts punched out of a strip-shaped steel sheet via an adhesive while feeding the strip-shaped steel sheet, and includes a curing acceleration portion forming part forming a curing acceleration portion by applying and drying a curing accelerator on one or both surfaces of the strip-shaped steel sheet, a pressing oil application part disposed downstream of the curing acceleration portion forming part and configured to apply a pressing oil to at least a surface of the curing acceleration portion, a pressing part disposed downstream of the pressing oil application part and configured to apply press processing to the strip-shaped steel sheet, and an adhesive application part applying the adhesive to the one surface of the strip-shaped steel sheet.

According to the adhesively-laminated core manufacturing device of the above-described (10), in the curing acceleration portion forming part, the curing acceleration portion is formed on the strip-shaped steel sheet in a state in which the curing acceleration portion has been dried and cured in advance. Therefore, the curing acceleration portion being mixed with the pressing oil applied by the pressing oil application part can be curbed. Therefore, when the electrical steel sheets are laminated and adhered together, since the curing acceleration portion can be mixed with the adhesive while a high concentration thereof is maintained, a high adhesive strength can be exhibited in an early stage. Therefore, higher productivity can be obtained while securing a sufficient adhesive strength.

(11) In the adhesively-laminated core manufacturing device according to the above-described (10), the curing acceleration portion forming part, the pressing oil application part, the pressing part, and the adhesive application part may be aligned in that order in a direction in which the strip-shaped steel sheet is fed.

According to the adhesively-laminated core manufacturing device of the above-described (11), in the curing acceleration portion forming part, the curing acceleration portion has been dried and cured in advance, and is in a state in which its mixing with the pressing oil applied at the pressing oil application part is curbed. Therefore, when the first steel sheet part and the second steel sheet part are overlapped and adhered, the curing acceleration portion can be mixed with the adhesive while maintaining a high concentration.

(12) The adhesively-laminated core manufacturing device according to the above-described (10) may be configured to include a first stage having the curing acceleration portion forming part, and a second stage including a conveying unit for feeding the strip-shaped steel sheet transferred from the first stage toward the pressing oil application part, in which the second stage may include the conveying unit, the pressing oil application part, the pressing part, and the adhesive application part which are disposed to be aligned in that order in a direction in which the strip-shaped steel sheet is fed.

According to the adhesively-laminated core manufacturing device of the above-described (12), the strip-shaped steel sheet on which the curing acceleration portion has been formed in advance can be prepared beforehand in the first stage. Then, a required number of strip-shaped steel sheets are taken out of these strip-shaped steel sheets and transferred to the second stage to perform application of the pressing oil, application of the adhesive, and adhesion between the first steel sheet part and the second steel sheet part. In this way, even when the adhesively-laminated core manufacturing device is divided into the first stage and the second stage, higher productivity can be obtained while securing a sufficient adhesive strength.

(13) In the adhesively-laminated core manufacturing device according to any one of the above-described (10) to (12), the adhesive may be an anaerobic adhesive or a 2-cyanoacrylate-based adhesive.

According to the adhesively-laminated core manufacturing device of the above-described (13), advantages can be obtained in that an amount of the curing accelerator can be relatively increased without affecting workability, a curing time can be reduced, and an adhesive strength can be improved.

(14) In the adhesively-laminated core manufacturing device according to the above-described (13), a curing accelerator for the anaerobic adhesive may contain an active component promoting anaerobic curing selected from titanium, chromium, manganese, iron, cobalt, nickel, copper, zinc, silver, vanadium, molybdenum, ruthenium, saccharin, and a combination thereof.

That is, in the adhesively-laminated core manufacturing device according to the above-described (13), as a curing accelerator for the anaerobic adhesive, one containing an active component that promotes the anaerobic curing can be exemplified.

An active component promoting anaerobic curing is selected from titanium, chromium, manganese, iron, cobalt, nickel, copper, zinc, silver, vanadium, molybdenum, ruthenium, saccharin, and a combination thereof. Preferably, it is selected from copper, iron, vanadium, cobalt, chromium, silver, manganese, and a combination thereof. Desirably, it is copper, iron, vanadium, cobalt, chromium, or a combination thereof. Desirably, it is provided in a form of a metal oxide or salt. One or a combination of two or more selected from vanadium acetylacetonate, vanadyl acetylacetonate, vanadyl stearate, vanadium propoxide, vanadium butoxide, vanadium pentoxide, cobalt naphthenate, manganese naphthenate, copper hexanoate, bis(2-ethylhexanoate)copper(II), and the like are preferable examples.

According to the adhesively-laminated core manufacturing device of the above-described (14), since the anaerobic adhesive is cured quickly and completely, advantages can be obtained in that it is extremely excellent particularly in manufacturing that requires a short manufacturing time, suppression of outgassing, or the like, and productivity can be improved.

(15) In the adhesively-laminated core manufacturing device according to the above-described (13), a curing accelerator for the 2-cyanoacrylate-based adhesive may contain an active component promoting curing of the 2-cyanoacrylate-based adhesive selected from organic amines such as dimethylaniline, diethylamine, o-phenylenediamine, dimethylparatoluidine, diethylparatoluidine, and N,N-diethylaniline, acid amides such as trichloroacetamide, organic imides such as succinimide, quaternary ammonium salts such as tetramethylammonium chloride and benzyltrimethylammonium chloride, and a combination thereof.

That is, in the adhesively-laminated core manufacturing device according to the above-described (13), as a curing accelerator for the 2-cyanoacrylate-based adhesive, one containing an active component that promotes curing of the 2-cyanoacrylate-based adhesive can be exemplified.

Specific examples of the active component that promotes curing of the 2-cyanoacrylate-based adhesive are those selected from organic amines such as dimethylaniline, diethylamine, o-phenylenediamine, dimethylparatoluidine, diethylparatoluidine, and N,N-diethylaniline, acid amides such as trichloroacetamide, organic imides such as succinimide, quaternary ammonium salts such as tetramethylammonium chloride and benzyltrimethylammonium chloride, and a combination thereof. One or a combination of two or more selected from organic amines such as dimethylaniline, diethylamine, o-phenylenediamine, dimethylparatoluidine, diethylparatoluidine, and N,N-diethylaniline are preferable examples.

According to the adhesively-laminated core manufacturing device of the above-described (15), since the 2-cyanoacrylate-based adhesive is cured quickly and completely, advantages can be obtained in that it is extremely excellent particularly in manufacturing that requires a short manufacturing time, suppression of outgassing, or the like, and productivity can be improved.

(16) In the adhesively-laminated core manufacturing device according to the above-described (13), a curing accelerator for the anaerobic adhesive or the 2-cyanoacrylate-based adhesive may contain an active component promoting anaerobic curing or an active component promoting curing of the 2-cyanoacrylate-based adhesive diluted with a solvent such as a ketone-based solvent, an alcohol-based solvent, an ester-based solvent, a glycol ether-based solvent, a hydrocarbon-based solvent, a halogenated hydrocarbon-based solvent, an ether-based solvent, a glycol-based solvent, or an amine-based solvent.

As a solvent species, at least one selected from the above-described solvent species, or a combination thereof is selected. From the perspective of manufacturing the adhesively-laminated core, one or a combination of two or more selected from ethyl acetate, acetone, ethanol, methanol, butanol, and toluene are preferable examples.

(17) In the adhesively-laminated core manufacturing device according to any one of the above-described (10) to (16), the adhesively-laminated core may be a stator for a rotary electric machine.

According to the adhesively-laminated core manufacturing device of the above-described (17), since higher productivity can be obtained while securing a sufficient adhesive strength, it is possible to manufacture a stator for a rotary electric machine having high performance with a low manufacturing cost.

### [Effects of the Invention]

According to the above-described aspects of the present invention, it is possible to provide an adhesively-laminated core manufacturing method and an adhesively-laminated core manufacturing device in which higher productivity can be obtained while securing a sufficient adhesive strength in manufacturing an adhesively-laminated core.

### [Brief Description of Drawings]

FIG. 1 is a cross-sectional view of a rotary electric machine including an adhesively-laminated stator core manufactured according to embodiments of the present invention.
FIG. 2 is a side view of the adhesively-laminated stator core.
FIG. 3 is a side view of an adhesively-laminated core manufacturing device according to a first embodiment of the present invention.
FIG. 4 is a flowchart for explaining an adhesively-laminated core manufacturing method according to the first embodiment.
FIG. 5 is a side view of an adhesively-laminated core manufacturing device according to a second embodiment of the present invention.
FIG. 6 is a flowchart for explaining an adhesively-laminated core manufacturing method according to the second embodiment.
FIG. 7 is a side view of an adhesively-laminated core manufacturing device according to a third embodiment of the present invention.
FIG. 8 is a flowchart for explaining an adhesively-laminated core manufacturing method according to the third embodiment.
FIG. 9 is a side view of an adhesively-laminated core manufacturing device according to a fourth embodiment of the present invention.

### [Embodiment(s) for implementing the Invention]

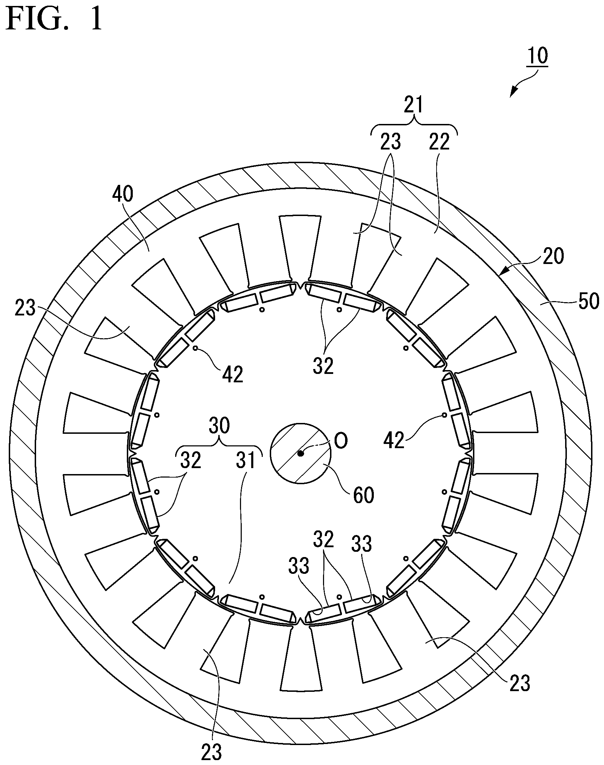

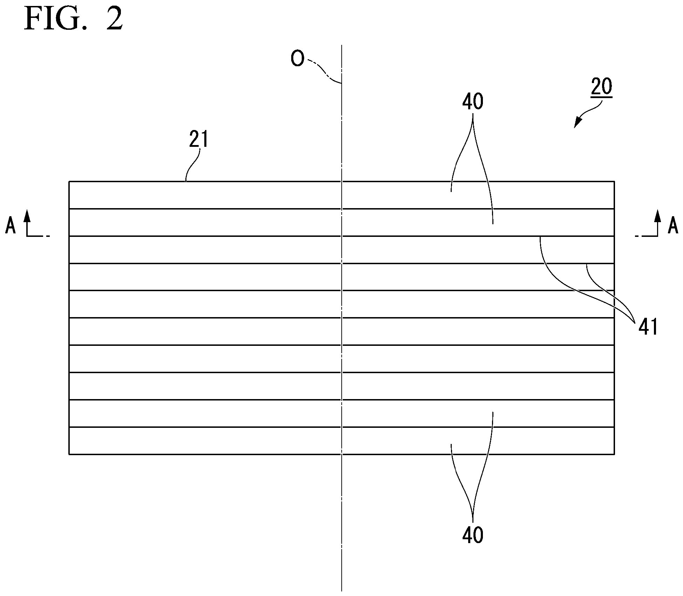

Hereinafter, an adhesively-laminated core manufacturing method and an adhesively-laminated core manufacturing device according to each embodiment of the present invention will be described with reference to the drawings. Before the description, an adhesively-laminated stator core (an adhesively-laminated core, a stator for a rotary electric machine) manufactured in each embodiment will be described first using FIG. 1 and FIG. 2.

### [Adhesively-laminated stator core]

FIG. 1 is a cross-sectional view of a rotary electric machine 10 including an adhesively-laminated stator core 21 manufactured according to each embodiment. FIG. 2 is a side view of the adhesively-laminated stator core 21.

Hereinafter, a case in which the rotary electric machine 10 illustrated in FIG. 1 is a motor, specifically an AC motor, more specifically a synchronous motor, or even more specifically a permanent magnet motor will be described as an example. A motor of this type is suitably employed for, for example, electric automobiles.

As illustrated in FIG. 1, the rotary electric machine 10 includes a stator 20, a rotor 30, a case 50, and a rotating shaft 60. The stator 20 and the rotor 30 are housed in the case 50. The stator 20 is fixed in the case 50.

In the example of FIG. 1, an inner rotor type in which the rotor 30 is positioned on a radially inner side of the stator 20 is illustrated as the rotary electric machine 10. However, the rotary electric machine 10 may be of an outer rotor type in which the rotor 30 is positioned on an outer side of the stator 20. Also, here, a case in which the rotary electric machine 10 is a 12-pole 18-slot three-phase AC motor is exemplified.
However, the number of poles, the number of slots, the number of phases, or the like can be changed as appropriate.

The rotary electric machine 10 can rotate at a rotation speed of 1000 rpm by applying, for example, an excitation current having an effective value of 10 A and a frequency of 100 Hz to each phase.

The stator 20 includes the adhesively-laminated stator core 21 and a winding (not illustrated).

The adhesively-laminated stator core 21 includes an annular core back part 22 and a plurality of tooth parts 23. Hereinafter, a central axis O direction of the adhesively-laminated stator core 21 (or the core back part 22) is referred to as an axial direction, a radial direction (a direction perpendicular to the central axis O) of the adhesively-laminated stator core 21 (or the core back part 22) is referred to as a radial direction, and a circumferential direction (a direction revolving around the central axis O) of the adhesively-laminated stator core 21 (or the core back part 22) is referred to as a circumferential direction.

The core back part 22 is formed in an annular shape in a plan view of the stator 20 from the axial direction.

The plurality of tooth parts 23 protrude inward in the radial direction from an inner circumference of the core back part 22. The plurality of tooth parts 23 are disposed at equiangular intervals in the circumferential direction. In the example of FIG. 1, 18 tooth parts 23 are provided every 20 degrees in terms of a central angle with the central axis O as a center. The plurality of tooth parts 23 are formed to have the same shape and the same size as each other. Therefore, the plurality of tooth parts 23 have the same thickness dimension as each other.

The winding is wound around each of the tooth parts 23. The winding may be a concentrated winding or a distributed winding.

The rotor 30 is disposed on a radially inner side with respect to the stator 20 (the adhesively-laminated stator core 21). The rotor 30 includes a rotor core 31 and a plurality of permanent magnets 32.

The rotor core 31 is formed in a ring shape (annular shape) disposed coaxially with the stator 20. The rotating shaft 60 is disposed in the rotor core 31. The rotating shaft 60 is fixed to the rotor core 31.

The plurality of permanent magnets 32 are fixed to the rotor core 31. In the example in FIG. 1, a set of two permanent magnets 32 forms one magnetic pole. The plurality of sets of permanent magnets 32 are disposed at equiangular intervals in the circumferential direction. In the example in FIG. 1, 12 sets (24 in total) of the permanent magnets 32 are provided every 30 degrees in terms of the central angle with the central axis O as a center.

In the example of FIG. 1, an interior permanent magnet motor is employed as the permanent magnet motor. A plurality of through holes 33 penetrating the rotor core 31 in the axial direction are formed in the rotor core 31. The plurality of through holes 33 are provided to correspond to a disposition of the plurality of permanent magnets 32. The permanent magnets 32 are each fixed to the rotor core 31 in a state of being disposed in the corresponding through hole 33. Fixing of each permanent magnet 32 to the rotor core 31 can be realized, for example, by causing an outer surface of the permanent magnet 32 and an inner surface of the through hole 33 to be adhered to each other with an adhesive, or the like. Further, a surface permanent magnet motor may be employed as the permanent magnet motor instead of an interior permanent magnet type.

Both the adhesively-laminated stator core 21 and the rotor core 31 are laminated cores. For example, the adhesively-laminated stator core 21 is formed by laminating a plurality of electrical steel sheets 40 in a lamination direction as illustrated in FIG. 2.

Further, laminated thicknesses (entire length along the central axis O) of the adhesively-laminated stator core 21 and the rotor core 31 are each, for example, 50.0 mm. An outer diameter of the adhesively-laminated stator core 21 is, for example, 250.0 mm. An inner diameter of the adhesively-laminated stator core 21 is, for example, 165.0 mm. An outer diameter of the rotor core 31 is, for example, 163.0 mm. An inner diameter of the rotor core 31 is, for example, 30.0 mm. However, these values are an example, and the laminated thickness, the outer diameter, and the inner diameter of the adhesively-laminated stator core 21, and the laminated thickness, the outer diameter, and the inner diameter of the rotor core 31 are not limited only to these values. Here, a distal end portion of the tooth part 23 of the adhesively-laminated stator core 21 is used as a reference for the inner diameter of the adhesively-laminated stator core 21. That is, the inner diameter of the adhesively-laminated stator core 21 is a diameter of a virtual circle inscribed in the distal end portions of all the tooth parts 23.

Each of the electrical steel sheets 40 forming the adhesively-laminated stator core 21 and the rotor core 31 is formed, for example, by punching a strip-shaped steel sheet serving as a base material. As the electrical steel sheet 40, a known electrical steel sheet can be used. A chemical composition of the electrical steel sheet 40 contains 2.5% to 3.9% of Si in units of % by mass as illustrated below. When the chemical composition is within this range, a yield strength of each electrical steel sheet 40 can be set to 380 MPa or more and 540 MPa or less.
Si: 2.5% to 3.9%
Al: 0.001% to 3.0%
Mn: 0.05% to 5.0%
Remainder: Fe and impurities

In the present embodiment, a non-grain-oriented electrical steel sheet is employed as the electrical steel sheet 40. A non-grain-oriented electrical steel strip of JIS C 2552:2014 can be employed as the non-grain-oriented electrical steel sheet. However, a grain-oriented electrical steel sheet may also be employed as the electrical steel sheet 40 instead of a non-grain-oriented electrical steel sheet. As the grain-oriented electrical steel sheet in this case, a grain-oriented electrical steel strip of JIS C 2553:2012 can be employed.

In order to improve workability of the laminated core and iron loss of the laminated core, both sides of the electrical steel sheet 40 are coated with a phosphate-based insulation coating. As a material constituting the insulation coating, for example, (1) an inorganic compound, (2) an organic resin, (3) a mixture of an inorganic compound and an organic resin, or the like can be employed. As the inorganic compound, for example, (1) a compound of dichromate and a boric acid, (2) a compound of phosphate and silica, or the like can be exemplified. As the organic resin, an epoxy-based resin, an acrylic-based resin, an acrylic-styrene-based resin, a polyester-based resin, a silicone-based resin, a fluorine-based resin, or the like can be exemplified.

### [First embodiment]

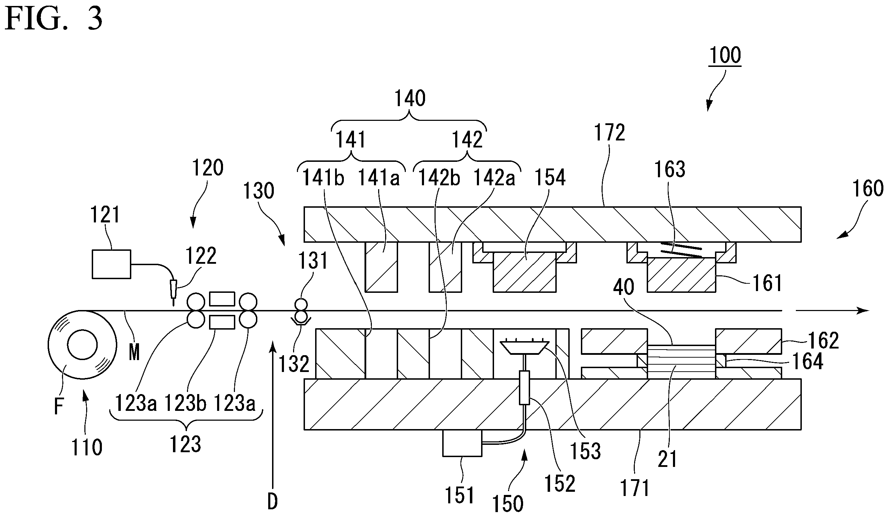

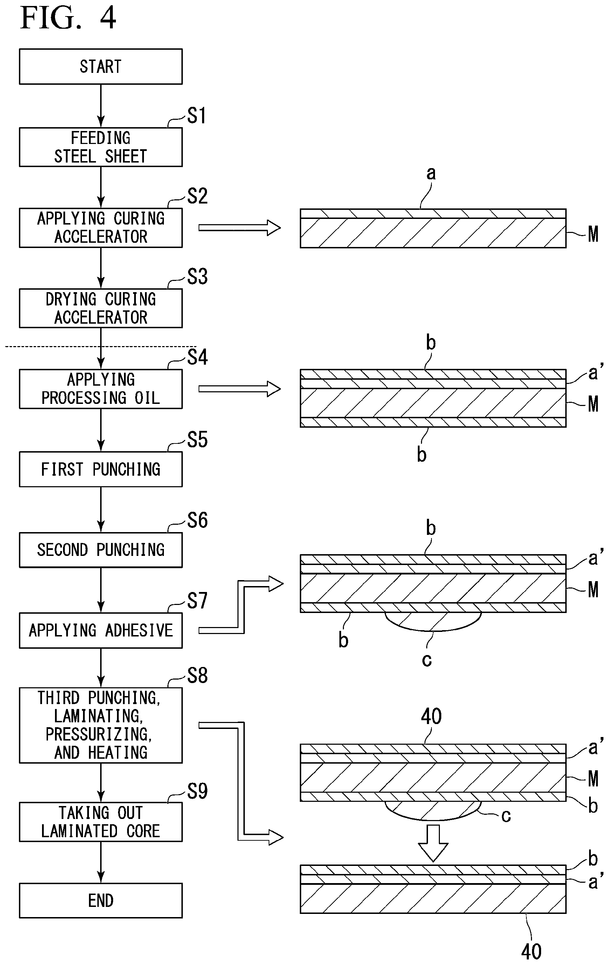

A first embodiment of the present invention will be described below with reference to FIGS. 3 and 4. FIG. 3 is a side view of an adhesively-laminated core manufacturing device according to the present embodiment. Also, FIG. 4 is a flowchart for explaining an adhesively-laminated core manufacturing method according to the present embodiment.

As illustrated in FIG. 3, an adhesively-laminated core manufacturing device 100 of the present embodiment includes a strip-shaped steel sheet supply part 110, a curing acceleration portion forming part 120, a drive unit (not illustrated), a pressing oil application part 130, a pressing part 140, an adhesive application part 150, and an adhesively-laminating part 160. Of these, a combination of the pressing part 140, the adhesive application part 150, and the adhesively-laminating part 160 constitutes a progressive die.

A hoop material F wound with a strip-shaped steel sheet M, which is a material of the electrical steel sheet (steel sheet part) 40, is pivotally supported by the strip-shaped steel sheet supply part 110, and feeds the strip-shaped steel sheet M toward the right side as viewed in FIG. 3. In the following description, the right side as viewed in FIG. 3, which is a direction in which the strip-shaped steel sheet M is fed, may be referred to as a downstream side (or downstream direction), and the left side as viewed in FIG. 3, which is an opposite direction thereto, may be referred to as an upstream side (or upstream direction). The strip-shaped steel sheet M fed toward the downstream side from the strip-shaped steel sheet supply part 110 is a steel sheet having the above-described chemical composition, and both surfaces thereof are coated with the above-described insulation coating.

The curing acceleration portion forming part 120 includes a curing accelerator tank 121, a nozzle 122, and a dryer 123.

A curing accelerator is stored in the curing accelerator tank 121. As a curing accelerator for an anaerobic adhesive, one containing an active component that promotes the anaerobic curing is exemplified, and as a curing accelerator for a 2-cyanoacrylate-based adhesive, one containing an active component that promotes curing of the 2-cyanoacrylate-based adhesive is exemplified. The curing accelerator promotes instant curing of the adhesive by being mixed with the anaerobic adhesive or the 2-cyanoacrylate-based adhesive.

The curing accelerator includes one containing an active component that promotes the anaerobic curing or an active component that promotes curing of the 2-cyanoacrylate-based adhesive diluted with a solvent such as a ketone-based solvent, an alcohol-based solvent, an ester-based solvent, a glycol ether-based solvent, a hydrocarbon-based solvent, a halogenated hydrocarbon-based solvent, an ether-based solvent, a glycol-based solvent, or an amine-based solvent.

As a solvent species, at least one selected from the above-described solvent species, or a combination thereof is selected. From the perspective of manufacturing the adhesively-laminated core, one or a combination of two or more selected from ethyl acetate, acetone, ethanol, methanol, butanol, and toluene are preferable examples.

As will be described later, in the adhesively-laminated core manufacturing method of the present embodiment, a curing accelerator applied to the strip-shaped steel sheet M is dried and cured in advance to form a curing acceleration portion, and then its surface is coated with pressing oil. Therefore, the curing accelerator being mixed into the pressing oil is curbed.

Here, even if a low-boiling alcohol-based solvent is used as a solvent for the curing accelerator, it is dried to volatilize a solvent component thereof in advance before applying the pressing oil, therefore handling in consideration of the alcohol-based solvent being mixed into the pressing oil is not necessary. As described above, in the adhesively-laminated core manufacturing method of the present embodiment, since a disadvantage due to a solvent of the curing accelerator being mixed into the pressing oil does not occur, a wide range of options can be obtained as solvents that can be used, and workability is also high. Further, as for a degree of dryness of the curing acceleration portion (curing accelerator), drying the solvent until it is completely volatilized is most preferable, but in addition to this, the term "drying" also includes a case in which the curing acceleration portion is formed with the curing accelerator dried to an extent of not being mixed with the pressing oil.

As a means for quantitatively examining a degree of dryness of the curing acceleration portion, it can be determined by detecting an amount of an active component of the curing accelerator contained in the pressing oil after being applied to the curing acceleration portion.

That is, if an amount of the active component of the curing accelerator contained in the pressing oil is more than 1 % by weight, it is determined to be in an undried state. Therefore, when an amount of the active component contained in the curing accelerator is 1% by weight or less, preferably 0.5% by weight or less, and more preferably 0.1% by weight or less, it can be determined to be "dry." Here, objects to be detected as an active component of the curing accelerator, when an anaerobic adhesive is used, include those selected from titanium, chromium, manganese, iron, cobalt, nickel, copper, zinc, silver, vanadium, molybdenum, ruthenium, saccharin, and a combination thereof. Also, objects to be detected as an active component of the curing accelerator, when a 2-cyanoacrylate-based adhesive is used, include organic amines such as dimethylaniline, diethylamine, o-phenylenediamine, dimethylparatoluidine, diethylparatoluidine, and N,N-diethylaniline, acid amides such as trichloroacetamide, organic imides such as succinimide, quaternary ammonium salts such as tetramethylammonium chloride and benzyltrimethylammonium chloride, and a combination thereof.

When the curing accelerator is mixed into the pressing oil, a metal catalyst of the curing accelerator dissolved in the pressing oil is discharged while it is dissolved in the pressing oil without being used for its intended purpose of promoting curing. In this case, it is difficult to recover and reuse the metal catalyst of the curing accelerator from the discharged pressing oil, and in addition, it also takes time and effort for treating the pressing oil before it is discarded. Conversely, if the metal catalyst in the curing accelerator is of a type that does not completely dissolve in the pressing oil, the metal catalyst may be precipitated and deposited on a pressing oil discharge path of a die, causing clogging and residue.

Furthermore, an appropriate mixing ratio has been defined between a curing accelerator and an adhesive, and adhesion performance is lowered even if the mixing ratio is higher or lower than the mixing ratio. If the curing accelerator is mixed in the pressing oil, it is necessary to increase an amount of the curing accelerator to compensate for a loss thereof. However, since a steel sheet part of the adhesively-laminated core has a complicated shape, it is not easy to adjust an adhesion amount of the curing accelerator to a target value. Therefore, there is a likelihood that adjustment will not go well and intended adhesion performance cannot be exhibited at a high level.

An active component promoting anaerobic curing is selected from titanium, chromium, manganese, iron, cobalt, nickel, copper, zinc, silver, vanadium, molybdenum, ruthenium, saccharin, and a combination thereof. Preferably, it is selected from copper, iron, vanadium, cobalt, chromium, silver, and manganese, and a combination thereof. Desirably, it is copper, iron, vanadium, cobalt, or chromium, or a combination thereof. Desirably, it is provided in a form of a metal oxide or salt. Preferably, one or a combination of two or more selected from vanadium acetylacetonate, vanadyl acetylacetonate, vanadyl stearate, vanadium propoxide, vanadium butoxide, vanadium pentoxide, cobalt naphthenate, manganese naphthenate, copper hexanoate, bis(2-ethylhexanoate)copper(II), and the like is exemplified. When a curing accelerator is mixed with an anaerobic adhesive, the curing accelerator promotes instant curing of the adhesive.

The curing accelerator for the 2-cyanoacrylate-based adhesive contains an active component promoting curing of the 2-cyanoacrylate-based adhesive selected from organic amines such as dimethylaniline, diethylamine, o-phenylenediamine, dimethylparatoluidine, diethylparatoluidine, and N,N-diethylaniline, acid amides such as trichloroacetamide, organic imides such as succinimide, quaternary ammonium salts such as tetramethylammonium chloride and benzyltrimethylammonium chloride, and a combination thereof. One or a combination of two or more selected from organic amines such as dimethylaniline, diethylamine, o-phenylenediamine, dimethylparatoluidine, diethylparatoluidine, and N,N-diethylaniline are preferable examples.

The nozzle 122 is connected to the curing accelerator tank 121. The nozzle 122 has a nozzle port facing an upper surface of the strip-shaped steel sheet M and applies an appropriate amount of the curing accelerator in the curing accelerator tank 121 to the upper surface. The curing accelerator is applied so that the entire surface of the upper surface is coated in the present embodiment, but the present invention is not limited to this form, and the curing accelerator may be configured to be partially applied, for example, in a dot shape or the like.

The dryer 123 includes a pair of rollers 123a and a dryer 123b.

The pair of rollers 123a are disposed downstream of the nozzle 122. The pair of rollers 123a hold the strip-shaped steel sheet M passing therebetween to be always kept horizontal.

The dryer 123b is disposed at a position sandwiched between the pair of rollers 123a. The dryer 123b dries the curing accelerator by blowing air onto upper and lower surfaces of the strip-shaped steel sheet M. Thereby, when the strip-shaped steel sheet M has passed upstream one of the pair of rollers 123a, the curing accelerator begins to be dried by being blown with air, and then drying is completed before the strip-shaped steel sheet M reaches downstream one of the pair of rollers 123a. Therefore, on the upper surface of the strip-shaped steel sheet M after passing through the downstream one of the pair of rollers 123a, a curing acceleration layer (curing acceleration portion) in which the solvent has been dried is formed over the entire surface with a uniform thickness. An example of the thickness of the curing acceleration layer is 0.1 µm. Further, since the curing accelerator is not applied to the lower surface of the strip-shaped steel sheet M, the insulation coating remains in an exposed state.

The drive unit is disposed at a position D between the curing acceleration portion forming part 120 and the pressing oil application part 130. The drive unit intermittently feeds the strip-shaped steel sheet M from the curing acceleration portion forming part 120 in a rightward direction toward the pressing oil application part 130 as viewed in the drawing. Further, the curing acceleration layer in which the curing accelerator has been dried is already formed on the upper surface of the strip-shaped steel sheet M fed from the curing acceleration portion forming part 120 before reaching the drive unit. On the other hand, the lower surface of the strip-shaped steel sheet M before reaching the drive unit does not have the curing acceleration layer, and the insulation coating remains in an exposed state.

The pressing oil application part 130 includes an application roller 131 and an oil pan 132.

The oil pan 132 is disposed below the application roller 131 and stores a pressing oil. The application roller 131 is a pair of rollers that hold the strip-shaped steel sheet M to be vertically sandwiched therebetween, and is in contact with the upper surface and the lower surface of the strip-shaped steel sheet M to send the strip-shaped steel sheet M downstream while applying the pressing oil. When the pressing oil is applied by the pressing oil application part 130, since the dried curing acceleration layer has been formed on the upper surface of the strip-shaped steel sheet M, a pressing oil layer is formed over the entire surface of the curing acceleration layer without being mixed. That is, the surface of the curing acceleration layer is coated by the pressing oil layer without gaps. At the same time, the pressing oil layer is also formed over the entire lower surface (insulation coating) of the strip-shaped steel sheet M.

The pressing part 140 includes a first stage punching part 141 and a second stage punching part 142, and forms a part of the progressive die.

The first stage punching part 141 is disposed downstream of the pressing oil application part 130 and includes a male die 141a and a female die 141b. The male die 141a and the female die 141b are disposed coaxially in a vertical direction, and the strip-shaped steel sheet M is inserted therebetween. Therefore, the male die 141a faces the upper surface of the strip-shaped steel sheet M, and the female die 141b faces the lower surface of the strip-shaped steel sheet M. Then, in a state in which feeding of the strip-shaped steel sheet M is temporarily stopped, first punching processing required to form the electrical steel sheet 40 out of the strip-shaped steel sheet M is performed by moving the male die 141a downward into the female die 141b using a hydraulic mechanism (not illustrated). At this time, since the pressing oil has been applied to the upper and lower surfaces of the strip-shaped steel sheet M, punching can be performed without causing seizure or the like.

Furthermore, since the surface of the curing acceleration layer is coated with the pressing oil, the curing acceleration layer adhering to the male die 141a and the female die 141b can be curbed. Therefore, since a likelihood of the curing acceleration layer peeling off and being deposited on the male die 141a and the female die 141b can be suppressed, deterioration in structural strength and magnetic characteristics of the adhesively-laminated stator core 21 to be manufactured thereafter can be suppressed.

After the strip-shaped steel sheet M has been subjected to the punching processing, the male die 141a is moved upward to be pulled out of the female die 141b, and the strip-shaped steel sheet M is fed downstream again.

The second stage punching part 142 is disposed downstream of the first stage punching part 141 and includes a male die 142a and a female die 142b. The male die 142a and the female die 142b are disposed coaxially in the vertical direction, and the strip-shaped steel sheet M after finishing the first punching processing is inserted therebetween. Therefore, the male die 142a faces the upper surface of the strip-shaped steel sheet M, and the female die 142b faces the lower surface of the strip-shaped steel sheet M. Then, in a state in which feeding of the strip-shaped steel sheet M is temporarily stopped again, second punching processing required to form the electrical steel sheet 40 out of the strip-shaped steel sheet M is performed by moving the male die 142a downward into the female die 142b using the hydraulic mechanism (not illustrated). Also at this time, since the pressing oil has been applied to the upper and lower surfaces of the strip-shaped steel sheet M, punching can be performed without causing seizure or the like.

Also at this time, since the surface of the curing acceleration layer is coated with the pressing oil, the curing acceleration layer adhering to the male die 142a and the female die 142b can be curbed. Therefore, since a likelihood of the curing acceleration layer peeling off and being deposited on the male die 142a and the female die 142b can be suppressed, deterioration in structural strength and magnetic characteristics of the adhesively-laminated stator core 21 to be manufactured thereafter can be suppressed.

After the strip-shaped steel sheet M has been subjected to the punching processing, the male die 142a is moved upward to be pulled out of the female die 142b, and the strip-shaped steel sheet M is fed downstream again.

The adhesive application part 150 is disposed downstream of the pressing part 140. The adhesive application part 150 includes an air pressure-feeder 151, a syringe 152, a nozzle 153, and a steel sheet presser 154.

The syringe 152 is a container that stores an adhesive and is connected between the air pressure-feeder 151 and the nozzle 153 via a pipe. Of adhesives, "Arontaito" (registered trademark) manufactured by Toagosei Co., Ltd. can be exemplified as an anaerobic adhesive, and "Aron Alpha" (registered trademark) manufactured by Toagosei Co., Ltd. can be exemplified as a 2-cyanoacrylate-based adhesive.

The nozzle 153 has a plurality of needles with discharge ports facing upward. The needles are disposed below the strip-shaped steel sheet M. Therefore, the discharge ports of the needles face the lower surface of the strip-shaped steel sheet M.

The steel sheet presser 154 is disposed above the nozzle 153 (immediately above the needles). Therefore, the steel sheet presser 154 faces the upper surface of the strip-shaped steel sheet M. The steel sheet presser 154 is pushed downward by the hydraulic mechanism (not illustrated) in a state in which feeding of the strip-shaped steel sheet M is temporarily stopped. Thereby, the lower surface of the steel sheet presser 154 comes into contact with the upper surface of the strip-shaped steel sheet M to press the strip-shaped steel sheet M downward. Thereby, a height position of the strip-shaped steel sheet M can be positioned by being pushed down to a position of adhesive application by the nozzle 153. In this positioning state, the lower surface of the strip-shaped steel sheet M is close to the discharge ports of the needles.

Further, in this state of positioning, when the air pressure-feeder 151 is started to pressure-feed an appropriate amount of air to the syringe 152, the adhesive in the syringe 152 is fed to the nozzle 153. As a result, an appropriate amount of the adhesive is discharged from each of the needles to be applied to the lower surface of the strip-shaped steel sheet M. Thereafter, the height position of the strip-shaped steel sheet M is returned to an original height by raising the steel sheet presser 154 by the hydraulic mechanism.

The adhesively-laminating part 160 is disposed downstream of the adhesive application part 150. The adhesively-laminating part 160 includes an outer shape punching male die 161, an outer shape punching female die 162, a spring 163, and a heater 164.

The outer shape punching male die 161 is a columnar die having a circular bottom surface, and has an upper end connected to a lower end of the spring 163. The outer shape punching male die 161 is vertically movable together with the spring 163 in a state of being supported by the spring 163. The outer shape punching male die 161 has an outer diameter dimension substantially the same as an outer diameter dimension of the adhesively-laminated stator core 21.

The outer shape punching female die 162 is a die having a columnar internal space, and has an inner diameter dimension substantially the same as an outer diameter dimension of the adhesively-laminated stator core 21.

The heater 164 is integrally incorporated in the outer shape punching female die 162. The heater 164 heats the electrical steel sheets (steel sheet parts) 40 laminated in the outer shape punching female die 162 from its periphery. When the adhesive used is a thermosetting type, the adhesive is cured by receiving heat from the heater 164. On the other hand, when the adhesive used is a room temperature curing type, the adhesive is cured at room temperature without needing heating.

According to the adhesively-laminating part 160, in a state in which feeding of the strip-shaped steel sheet M is temporarily stopped, the outer shape punching male die 161 is lowered to sandwich the strip-shaped steel sheet M between itself and the outer shape punching female die 162, the outer shape punching male die 161 is further pushed into the outer shape punching female die 162, and thereby the electrical steel sheet 40 that has been subjected to the outer shape punching from the strip-shaped steel sheet M can be obtained.

Also at this time, since the surface of the curing acceleration layer has been coated with the pressing oil, the curing acceleration layer adhering to the outer shape punching male die 161 and the outer shape punching female die 162 can be curbed. Therefore, since a likelihood of the curing acceleration layer peeling off and being deposited on the outer shape punching male die 161 and the outer shape punching female die 162 can be suppressed, deterioration in structural strength and magnetic characteristics of the adhesively-laminated stator core 21 to be manufactured thereafter can be suppressed.

The electrical steel sheet 40 punched out by the outer shape punching male die 161 is laminated on an upper surface of another electrical steel sheet 40 that has been previously punched out and adhesively laminated in the outer shape punching female die 162, and is further subjected to a pressing force from the outer shape punching male die 161 and heating from the heater 164. At this time, the pressing force applied to the electrical steel sheets 40 from the outer shape punching male die 161 is always kept constant by a biasing force of the spring 163.

As described above, the electrical steel sheet 40 punched out this time is adhesively fixed to an upper surface of the electrical steel sheet 40 that has been punched out previous time. When such steps of the outer shape punching, pressurizing, and heating described above are repeated as many times as the number of electrical steel sheets 40 to be laminated, the adhesively-laminated stator core 21 is formed in the outer shape punching female die 162.

As illustrated in FIG. 3, the female die 141b, the female die 142b, the nozzle 153, the outer shape punching female die 162, and the heater 164 are fixed on a common fixed base 171. Accordingly, relative positions of the female die 141b, the female die 142b, the nozzle 153, the outer shape punching female die 162, and the heater 164 in horizontal and vertical directions are fixed.

Similarly, the male die 141a, the male die 142a, the steel sheet presser 154, and the outer shape punching male die 161 are also fixed to a lower surface of a common movable base 172. Accordingly, relative positions of the male die 141a, the male die 142a, the steel sheet presser 154, and the outer shape punching male die 161 in the horizontal and vertical directions are fixed.

When the drive unit feeds the strip-shaped steel sheet M toward the downstream side, and the movable base 172 is lowered during the temporary stop, outer shape punching, lamination, and adhesion of the electrical steel sheet 40, application of the adhesive to a position of the electrical steel sheet 40 on the strip-shaped steel sheet M to be subjected to the outer shape punching next, the second punching processing to a position of the strip-shaped steel sheet M on which the adhesive is to be applied next, and the first punching processing to a position of the strip-shaped steel sheet M to be subjected to the second punching processing next are performed at the same time.

Next, after the movable base 172 is raised and retreated above the strip-shaped steel sheet M, the strip-shaped steel sheet M is fed downstream again by a predetermined distance by the drive unit, and then is temporarily stopped again. In this state, the movable base 172 is lowered again and processing at each position is continuously performed. In this way, the adhesively-laminated stator core 21 is manufactured by repeating the processing of vertically moving the movable base 172 during the temporary stop while intermittently feeding the strip-shaped steel sheet M in the progressive die by the drive unit.

An adhesively-laminated core manufacturing method using the adhesively-laminated core manufacturing device 100 having the above-described configuration will be described below with reference to FIG. 4.

As shown in FIG. 4, the adhesively-laminated core manufacturing method of the present embodiment includes a steel sheet feeding step S1, a curing accelerator application step S2, a curing accelerator drying step S3, a processing oil application step S4, a first punching step S5, a second punching step S6, an adhesive application step S7, an adhesively-laminated stator core forming step S8, and a take-out step S9.

In the steel sheet feeding step S1, the strip-shaped steel sheet M is fed from the hoop material F toward the downstream side.

In the subsequent curing accelerator application step S2, a curing accelerator a is applied from the nozzle 122 to the entire upper surface of the strip-shaped steel sheet M. The curing accelerator a at this point of time is in a liquid state.

In the subsequent curing accelerator drying step S3, air from the dryer 123b is blown onto the upper and lower surfaces of the strip-shaped steel sheet M to dry the curing accelerator a that has been in a liquid state, and thereby a curing acceleration layer (curing acceleration portion) a' is formed. The curing acceleration layer a' is a solid.

In the subsequent processing oil application step S4, a pressing oil b is applied to the upper and lower surfaces of the strip-shaped steel sheet M by the application roller 131 to form a layer. At this time, since the curing acceleration layer a' has been dried in advance, a concentration thereof is not lowered by being mixed with the pressing oil b and maintains substantially its original state.

In the subsequent first punching step S5, first punching of the strip-shaped steel sheet M is performed by the first stage punching part 141. At this time, since the pressing oil b has been applied to the strip-shaped steel sheet M in advance, a problem in press processing such as seizure or the like between the male die 141a and the female die 141b does not occur.

In the subsequent second punching step S6, second punching of the strip-shaped steel sheet M is performed by the second stage punching part 142. Also at this time, since the pressing oil b has been applied to the strip-shaped steel sheet M in advance, a problem in press processing such as seizure or the like between the male die 142a and the female die 142b does not occur.

Through the first punching step S5 and the second punching step S6 described above, the core back part 22 and the tooth parts 23 illustrated in FIG. 1 are formed on the strip-shaped steel sheet M except for an outer shape portion.

In the subsequent adhesive application step S7, an adhesive c discharged from the nozzle 153 is applied to be disposed on the lower surface of the strip-shaped steel sheet M via the pressing oil b. At this time, the adhesive c is applied in a dot shape having a predetermined thickness dimension and a predetermined diameter dimension. Here, the adhesive c has not yet been mixed with the curing acceleration layer a', and therefore is in a liquid state.

In the subsequent adhesively-laminated stator core forming step S8, the electrical steel sheet 40 whose outer shape has been punched out of the strip-shaped steel sheet M by the outer shape punching male die 161 is laminated on an upper surface of another electrical steel sheet 40 that has been previously punched out. At this time, the curing acceleration layer a' coated with the pressing oil b is formed on the upper surface of the another electrical steel sheet 40. The electrical steel sheet 40 that has been subjected to outer shape punching this time is laminated thereon and heated while being pressurized. Then, the adhesive c on the lower surface of the electrical steel sheet 40 that has been subjected to outer shape punching this time pushes away the pressing oil b on an upper surface side of the another electrical steel sheet 40 that has been subjected to outer shape punching previous time and mixes with the curing acceleration layer a' under the pressing oil b, and thereby the adhesive c is instantly cured.

When the above-described steps are sequentially repeated, the required number of electrical steel sheets 40 are laminated and adhered, and thereby the adhesively-laminated stator core 21 is completed. Specifically, the steps from the steel sheet feeding step S1 to the adhesively-laminated stator core forming step S8 are sequentially repeated until the number of laminated electrical steel sheets 40 reaches a predetermined number. Then, when the number of laminated electrical steel sheets 40 reaches the predetermined number after the adhesively-laminated stator core forming step S8, the processing proceeds to the take-out step S9 without returning to the steel sheet feeding step S1.

In the subsequent take-out step S9, the completed adhesively-laminated stator core 21 is taken out from the outer shape punching female die 162, and thereby the entire steps of the adhesively-laminated core manufacturing method end.

The gist of the adhesively-laminated core manufacturing method using the adhesively-laminated core manufacturing device 100 described above will be summarized below.

The adhesively-laminated core manufacturing method of the present embodiment is a method of manufacturing the adhesively-laminated stator core (adhesively-laminated core) 21 which includes obtaining a plurality of electrical steel sheets (steel sheet parts) 40 by performing press processing on the strip-shaped steel sheet M coated with the pressing oil b on both surfaces and applying the adhesive c to the lower surface (one surface) of the strip-shaped steel sheet M with the pressing oil b interposed therebetween, and adhesively laminating the electrical steel sheets 40 sequentially. Then, the curing acceleration layer (curing acceleration portion) a' is formed by applying and drying the curing accelerator a on the upper surface, which is one surface of the strip-shaped steel sheet M, before the pressing oil b is applied.

That is, the adhesively-laminated core manufacturing method of the present embodiment is a method of manufacturing the adhesively-laminated stator core 21 by punching a plurality of electrical steel sheets 40 while feeding the strip-shaped steel sheet M in the progressive die, and laminating each of the electrical steel sheets 40 via the adhesive c. Then, the adhesively-laminated core manufacturing method of the present embodiment includes a step of forming the curing acceleration layer a' by applying and drying the curing accelerator a on the upper surface, which is one surface of the strip-shaped steel sheet M, before the pressing oil b is applied, and a step of applying the pressing oil b to a surface of the curing acceleration layer a'.

More specifically, each electrical steel sheet 40 includes the electrical steel sheet (first steel sheet part) 40 punched out first, and the electrical steel sheet (second steel sheet part) 40 punched out later. Then, the adhesively-laminated core manufacturing method of the present embodiment is configured to perform a first step of obtaining the adhered electrical steel sheet (first steel sheet part) 40 by performing the steel sheet feeding step S1 to the adhesively-laminated stator core forming step S8, a second step of obtaining the electrical steel sheet (second steel sheet part) 40 before adhesion by performing the steel sheet feeding step S1 to the adhesive application step S7, and a third step of adhering the electrical steel sheet (second steel sheet part) 40 before adhesion on the adhered electrical steel sheet (first steel sheet part) 40 by performing the adhesively-laminated stator core forming step S8.

Here, in the first step, the electrical steel sheet (first steel sheet part) 40 having an upper surface (first surface), the curing acceleration layer (curing acceleration portion) a' formed on the upper surface, and the pressing oil b directly disposed on the upper surface of the curing acceleration layer a', and in which a lower surface thereof has been adhered to an upper surface of another electrical steel sheet 40 is prepared.

Also, in the second step, the electrical steel sheet (second steel sheet part) 40 before adhesion having a lower surface (second surface) and the adhesive c disposed on the lower surface via the pressing oil b is prepared.

Then, in the third step, the electrical steel sheet 40 before adhesion is adhered to overlap the adhered electrical steel sheet 40 so that the first surface and the second surface face each other.

According to the adhesively-laminated core manufacturing method described above, since the curing acceleration layer a' provided on the strip-shaped steel sheet M is formed to be dried in advance, its mixing with the pressing oil b to be applied in a post step is curbed. Therefore, when the electrical steel sheets 40 are laminated and adhered together, since the curing acceleration layer a' can be mixed with the adhesive c of the electrical steel sheet 40 to which it is adhered while an original high concentration is maintained, a high adhesive strength can be exhibited in an early stage. Therefore, higher productivity can be obtained while securing a sufficient adhesive strength.

Further, application of the pressing oil b is not limited to both surfaces of the strip-shaped steel sheet M, and may be applied to only one surface on which the curing acceleration layer a' is formed. Similarly, application of the curing accelerator a is not limited to one surface of the strip-shaped steel sheet M, and may be applied to both surfaces. Also, the application of the curing accelerator a is not limited to the application over the entire surface of the strip-shaped steel sheet M, and may be applied in a dot shape. However, in this case, in order for the dot-shaped adhesive c and the dot-shaped curing acceleration layer (curing acceleration portion) a' to be correctly overlapped and mixed by the adhesively-laminated stator core forming step S8, it is necessary to correctly adjust a relative positional relationship with the adhesive c to be applied in a post step.

The adhesively-laminated core manufacturing device 100 of the present embodiment includes the pressing oil application part 130 that applies the pressing oil b to both surfaces of the strip-shaped steel sheet M, the pressing part 140 that applies press processing to the strip-shaped steel sheet M, the adhesive application part 150 that applies the adhesive c to the lower surface of the strip-shaped steel sheet M with the pressing oil b interposed therebetween, and the curing acceleration portion forming part 120 that forms the curing acceleration layer a' by applying and drying the curing accelerator a on one surface of the strip-shaped steel sheet M before reaching the pressing oil application part 130.

That is, the adhesively-laminated core manufacturing device 100 of the present embodiment is a device manufacturing the adhesively-laminated stator core 21 by laminating a plurality of electrical steel sheets 40 punched out from the strip-shaped steel sheet M via the adhesive c while feeding the strip-shaped steel sheet M. Then, the adhesively-laminated core manufacturing device 100 of the present embodiment includes the curing acceleration portion forming part 120 that forms the curing acceleration layer a' by applying and drying the curing accelerator a on the upper surface which is one surface of the strip-shaped steel sheet M, the pressing oil application part 130 disposed downstream of the curing acceleration portion forming part 120 and configured to apply the pressing oil b to at least a surface of the curing acceleration layer a', the pressing part 140 disposed downstream of the pressing oil application part 130 and configured to apply press processing to the strip-shaped steel sheet M, and the adhesive application part 150 that applies the adhesive c to the lower surface, which is one surface of the strip-shaped steel sheet M, with the pressing oil b interposed therebetween.

The curing acceleration portion forming part 120, the pressing oil application part 130, the pressing part 140, and the adhesive application part 150 are aligned in that order in the feeding direction which is a direction in which the strip-shaped steel sheet M is fed.

According to the adhesively-laminated core manufacturing device 100, in the curing acceleration portion forming part 120, the curing acceleration portion a' is formed on the strip-shaped steel sheet M in a state in which it has been dried in advance. Therefore, the curing acceleration portion a' being mixed with the pressing oil b applied by the pressing oil application part 130 can be curbed. Therefore, when the electrical steel sheets 40 are laminated and adhered together, since the curing acceleration layer a' can be mixed with the adhesive c of the electrical steel sheet 40 to which it is adhered while a high concentration is maintained, a high adhesive strength can be exhibited in an early stage. Therefore, higher productivity can be obtained while securing a sufficient adhesive strength.

### [Second embodiment]

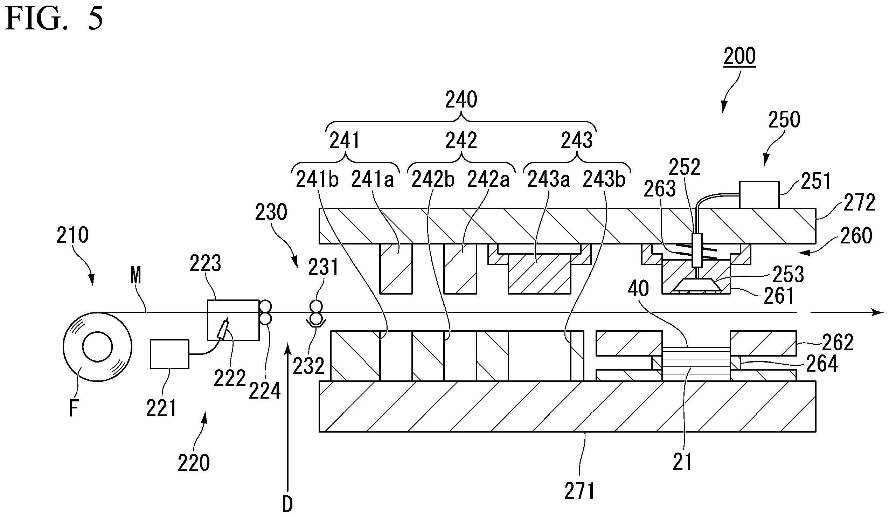

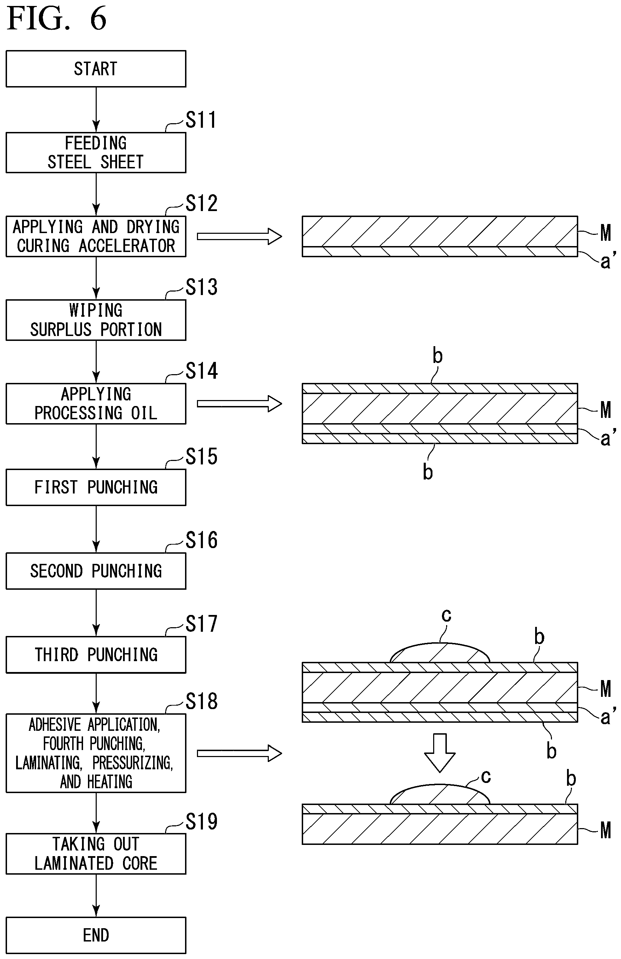

A second embodiment of the present invention will be described below with reference to FIGS. 5 and 6. FIG. 5 is a side view of an adhesively-laminated core manufacturing device according to the present embodiment. Also, FIG. 6 is a flowchart for explaining an adhesively-laminated core manufacturing method according to the present embodiment.

As illustrated in FIG. 5, an adhesively-laminated core manufacturing device 200 of the present embodiment includes a strip-shaped steel sheet supply part 210, a curing acceleration portion forming part 220, a drive unit (not illustrated), a pressing oil application part 230, a pressing part 240, an adhesive application part 250, and an adhesively-laminating part 260. Of these, a combination of the pressing part 240, the adhesive application part 250, and the adhesively-laminating part 260 constitutes a progressive die.

A hoop material F wound with a strip-shaped steel sheet M, which is a material of an electrical steel sheet (steel sheet part) 40, is pivotally supported by the strip-shaped steel sheet supply part 210, and feeds the strip-shaped steel sheet M toward the right side as viewed in FIG. 5. In the following description, the right side as viewed in FIG. 5, which is a direction in which the strip-shaped steel sheet M is fed, may be referred to as a downstream side (or downstream direction), and the left side as viewed in FIG. 5, which is an opposite direction thereto, may be referred to as an upstream side (or upstream direction). The strip-shaped steel sheet M fed toward the downstream side from the strip-shaped steel sheet supply part 210 is a steel sheet having the above-described chemical composition, and both surfaces thereof are coated with the above-described insulation coating.

The curing acceleration portion forming part 220 includes a curing accelerator tank 221, a nozzle 222, a seal box 223, and a wiping roller 224.

The curing accelerator tank 221 stores one in which a curing accelerator is dissolved in a solvent. As a curing accelerator of this, those exemplified in the first embodiment can be used. The curing accelerator promotes instant curing of the adhesive by being mixed with an anaerobic adhesive or a 2-cyanoacrylate-based adhesive.

The nozzle 222 is connected to the curing accelerator tank 221. The nozzle 222 has a nozzle port facing a lower surface of the strip-shaped steel sheet M and sprays an appropriate amount of the curing accelerator in the curing accelerator tank 221 to the lower surface. In the present embodiment, the curing accelerator is applied so that the entire surface of the lower surface is coated, but the present invention is not limited to this form, and the curing accelerator may be configured to be partially applied, for example, in a dot shape or the like.

The seal box 223 is a box having an internal space and has an inlet and an outlet leading to the internal space. The strip-shaped steel sheet M is fed into the internal space of the seal box 223 through the inlet and then fed out of the seal box 223 through the outlet while a horizontal state is maintained. The nozzle 222 is disposed below the internal space of the seal box 223. As described above, a nozzle port of the nozzle 222 is directed toward the lower surface of a portion of the strip-shaped steel sheet M that is inserted through the internal space. The curing accelerator sprayed from the nozzle 11 to the lower surface of the strip-shaped steel sheet M dries instantly because a solvent thereof is volatilized. Thereby, a curing acceleration layer (curing acceleration portion) in which the solvent has been dried is formed on the lower surface of the strip-shaped steel sheet M over the entire surface with a uniform thickness before the strip-shaped steel sheet M exits from the outlet. An example of the thickness of the curing acceleration layer is 0.1 µm. Further, as for a degree of dryness of the curing acceleration layer (curing accelerator), drying the solvent until it is completely volatilized is most preferable, but in addition to this, the term "drying" also includes a case in which the curing acceleration layer is formed of the curing accelerator dried to such an extent that it will not mix with a pressing oil.

As a means for quantitatively examining a degree of dryness of the curing acceleration layer, it can be determined by detecting an amount of an active component of the curing accelerator contained in the pressing oil after the pressing oil is applied to the curing acceleration portion.

Since the curing accelerator has not been hardly applied to an upper surface of the strip-shaped steel sheet M, the insulation coating remains substantially in an exposed state.

The wiping roller 224 mainly wipes off the curing accelerator remaining on the upper surface of the strip-shaped steel sheet M as a surplus. Thereby, the upper surface of the strip-shaped steel sheet M after passing through the wiping roller 224 is in a state in which the curing accelerator is completely wiped off and the insulation coating remains exposed.

The drive unit is disposed at a position D between the curing acceleration portion forming part 220 and the pressing oil application part 230. The drive unit intermittently feeds the strip-shaped steel sheet M from the curing acceleration portion forming part 220 in a rightward direction toward the pressing oil application part 230 as viewed in the drawing. Further, the curing acceleration layer in which the curing accelerator has been dried is already formed on the lower surface of the strip-shaped steel sheet M fed from the curing acceleration portion forming part 220 before reaching the drive unit. On the other hand, the upper surface of the strip-shaped steel sheet M before reaching the drive unit does not have the curing acceleration layer as described above, and the insulation coating remains in an exposed state.

The pressing oil application part 230 includes an application roller 231 and an oil pan 232.

The oil pan 232 is disposed below the application roller 231 and stores a pressing oil. The application roller 231 is a pair of rollers that hold the strip-shaped steel sheet M to be vertically sandwiched therebetween, and is in contact with the upper surface and the lower surface of the strip-shaped steel sheet M to send the strip-shaped steel sheet M downstream while applying the pressing oil. When the pressing oil is applied by the pressing oil application part 230, since the dried curing acceleration layer has been formed on the lower surface of the strip-shaped steel sheet M, a pressing oil layer is formed over the entire surface of the curing acceleration layer without being mixed. That is, the surface of the curing acceleration layer is coated by the pressing oil layer without gaps. At the same time, the pressing oil layer is also formed over the entire upper surface (insulation coating) of the strip-shaped steel sheet M.

The pressing part 240 is a progressive die including a first stage punching part 241, a second stage punching part 242, and a third stage punching part 243.

The first stage punching part 241 is disposed downstream of the pressing oil application part 230 and includes a male die 241a and a female die 241b. The male die 241a and the female die 241b are disposed coaxially in a vertical direction, and the strip-shaped steel sheet M is inserted therebetween. Therefore, the male die 241a faces the upper surface of the strip-shaped steel sheet M, and the female die 241b faces the lower surface of the strip-shaped steel sheet M. Then, in a state in which feeding of the strip-shaped steel sheet M is temporarily stopped, first punching processing required to form the electrical steel sheet 40 out of the strip-shaped steel sheet M is performed by moving the male die 241a downward into the female die 241b using a hydraulic mechanism (not illustrated). At this time, since the pressing oil has been applied to the upper and lower surfaces of the strip-shaped steel sheet M, punching can be performed without causing seizure or the like.

Furthermore, since the surface of the curing acceleration layer is coated with the pressing oil, the curing acceleration layer adhering to the male die 241a and the female die 241b can be curbed. Therefore, since a likelihood of the curing acceleration layer peeling off and being deposited on the male die 241a and the female die 241b can be suppressed, deterioration in structural strength and magnetic characteristics of an adhesively-laminated stator core 21 to be manufactured thereafter can be suppressed.

After the strip-shaped steel sheet M has been subjected to the punching processing, the male die 241a is moved upward to be pulled out of the female die 241b, and the strip-shaped steel sheet M is fed downstream again.

The second stage punching part 242 is disposed downstream of the first stage punching part 241 and includes a male die 242a and a female die 242b. The male die 242a and the female die 242b are disposed coaxially in the vertical direction, and the strip-shaped steel sheet M after finishing the first punching processing is inserted therebetween. Therefore, the male die 242a faces the upper surface of the strip-shaped steel sheet M, and the female die 242b faces the lower surface of the strip-shaped steel sheet M. Then, in a state in which feeding of the strip-shaped steel sheet M is temporarily stopped again, second punching processing required to form the electrical steel sheet 40 out of the strip-shaped steel sheet M is performed by moving the male die 242a downward into the female die 242b using the hydraulic mechanism (not illustrated). Also at this time, since the pressing oil has been applied to the upper and lower surfaces of the strip-shaped steel sheet M, punching can be performed without causing seizure or the like.

Also at this time, since the surface of the curing acceleration layer is coated with the pressing oil, the curing acceleration layer adhering to the male die 242a and the female die 242b can be curbed. Therefore, since a likelihood of the curing acceleration layer peeling off and being deposited on the male die 242a and the female die 242b can be suppressed, deterioration in structural strength and magnetic characteristics of the adhesively-laminated stator core 21 to be manufactured thereafter can be suppressed.

After the strip-shaped steel sheet M has been subjected to the punching processing, the male die 242a is moved upward to be pulled out of the female die 242b, and the strip-shaped steel sheet M is fed downstream again.

The third stage punching part 243 is disposed downstream of the second stage punching part 242 and includes a male die 243a and a female die 243b. The male die 243a and the female die 243b are disposed coaxially in the vertical direction, and the strip-shaped steel sheet M after finishing the second punching processing is inserted therebetween. Therefore, the male die 243a faces the upper surface of the strip-shaped steel sheet M, and the female die 243b faces the lower surface of the strip-shaped steel sheet M. Then, in a state in which feeding of the strip-shaped steel sheet M is temporarily stopped again, third punching processing required to form the electrical steel sheet 40 out of the strip-shaped steel sheet M is performed by moving the male die 243a downward into the female die 243b using the hydraulic mechanism (not illustrated). Also at this time, since the pressing oil has been applied to the upper and lower surfaces of the strip-shaped steel sheet M, punching can be performed without causing seizure or the like. After this punching processing, the male die 243a is moved upward to be pulled out of the female die 243b, and the strip-shaped steel sheet M is fed downstream again.

The adhesive application part 250 is incorporated in the adhesively-laminating part 260 on a downstream side of the pressing part 240. The adhesive application part 250 includes an air pressure-feeder 251, a syringe 252, and a nozzle 253.

The syringe 252 is a container that stores an adhesive and is connected between the air pressure-feeder 251 and the nozzle 253 via a pipe. As the adhesive, one described in the first embodiment can be used.

The nozzle 253 is disposed above the strip-shaped steel sheet M. Therefore, a discharge port of the nozzle 253 faces the upper surface of the strip-shaped steel sheet M.

The adhesively-laminating part 260 is disposed downstream of the pressing part 240 and at the same position as the adhesive application part 250. The adhesively-laminating part 260 includes an outer shape punching male die 261, an outer shape punching female die 262, a spring 263, and a heater 264.

The outer shape punching male die 261 is a columnar die having a circular bottom surface, and has an upper end connected to a lower end of the spring 263. The outer shape punching male die 261 is vertically movable together with the spring 263 in a state of being supported by the spring 263. The outer shape punching male die 261 has an outer diameter dimension substantially the same as an outer diameter dimension of the adhesively-laminated stator core 21. The nozzle 253 is incorporated in the outer shape punching male die 261. Then, the discharge port of the nozzle 253 is formed on the bottom surface of the outer shape punching male die 261.

The outer shape punching female die 262 is a die having a columnar internal space, and has an inner diameter dimension substantially the same as an outer diameter dimension of the adhesively-laminated stator core 21.

The heater 264 is integrally incorporated in the outer shape punching female die 262. The heater 264 heats the electrical steel sheets (steel sheet parts) 40 laminated in the outer shape punching female die 262 from its periphery. When the adhesive used is a thermosetting type, the adhesive is cured by receiving heat from the heater 264. On the other hand, when the adhesive used is a room temperature curing type, the adhesive is cured at room temperature without needing heating.

According to the adhesively-laminating part 260, in a state in which feeding of the strip-shaped steel sheet M is temporarily stopped, the outer shape punching male die 261 is lowered to sandwich the strip-shaped steel sheet M between itself and the outer shape punching female die 262, the outer shape punching male die 261 is further pushed into the outer shape punching female die 262, and thereby the electrical steel sheet 40 that has been subjected to the outer shape punching from the strip-shaped steel sheet M can be obtained.

Also at this time, since the surface of the curing acceleration layer has been coated with the pressing oil, the curing acceleration layer adhering to the outer shape punching male die 261 and the outer shape punching female die 262 can be curbed. Therefore, since a likelihood of the curing acceleration layer peeling off and being deposited on the outer shape punching male die 261 and the outer shape punching female die 262 can be suppressed, deterioration in structural strength and magnetic characteristics of the adhesively-laminated stator core 21 to be manufactured thereafter can be suppressed.

Further, at the time of the outer shape punching, if the air pressure-feeder 251 is started to pressure-feed an appropriate amount of air to the syringe 252, the adhesive in the syringe 252 is fed to the nozzle 253. As a result, an appropriate amount of the adhesive is discharged from the discharge port formed in the bottom surface of the outer shape punching male die 261 and is applied to the upper surface of the strip-shaped steel sheet M. The adhesive applied here is used for adhering another electrical steel sheet 40 to be subjected to outer shape punching and laminated next.

The electrical steel sheet 40 that has been subjected to outer shape punching this time by the outer shape punching male die 261 is laminated on an upper surface of another electrical steel sheet 40 that has been punched out previous time and adhesively laminated in the outer shape punching female die 262. Due to this lamination, the adhesive that has been formed on the upper surface of the another electrical steel sheet 40 previous time mixes with the curing acceleration layer formed on the lower surface of the electrical steel sheet 40 that has been subjected to outer shape punching this time. Further, a pressing force from the outer shape punching male die 261 and heating from the heater 264 are applied to the laminated electrical steel sheets 40. At this time, the pressing force applied to the electrical steel sheets 40 from the outer shape punching male die 261 is always kept constant by a biasing force of the spring 263.

As described above, the electrical steel sheet 40 punched out this time is adhesively fixed to an upper surface of the electrical steel sheet 40 that has been punched out previous time. On the other hand, the adhesive applied to the upper surface of the electrical steel sheet 40 punched out this time has not yet been mixed with the curing acceleration layer at this point of time, and therefore remains in a liquid state without curing.

When such steps of the outer shape punching, pressurizing, and heating described above are repeated as many times as the number of electrical steel sheets 40 to be laminated, the adhesively-laminated stator core 21 is formed in the outer shape punching female die 262.

As illustrated in FIG. 5, the female die 241b, the female die 242b, the female die 243b, the outer shape punching female die 262, and the heater 264 are fixed on a common fixed base 271. Accordingly, relative positions of the female die 241b, the female die 242b, the female die 243b, the outer shape punching female die 262, and the heater 264 in horizontal and vertical directions are fixed.

Similarly, the male die 241a, the male die 242a, the nozzle 253, and the outer shape punching male die 261 are also fixed to a lower surface of a common movable base 272. Accordingly, relative positions of the male die 241a, the male die 242a, the nozzle 253, and the outer shape punching male die 261 in the horizontal and vertical directions are fixed.

When the drive unit feeds the strip-shaped steel sheet M toward the downstream side, and the movable base 272 is lowered during the temporary stop, the outer shape punching, lamination, and adhesion of the electrical steel sheet 40 and the adhesive application for the next step, the third punching processing to a position of the strip-shaped steel sheet M to be subjected to the outer shape punching next, the second punching processing to a position of the strip-shaped steel sheet M to be subjected to the third punching processing next, and the first punching processing to a position of the strip-shaped steel sheet M to be subjected to the second punching processing next are performed at the same time.

Next, after the movable base 272 is raised and retreated above the strip-shaped steel sheet M, the strip-shaped steel sheet M is fed downstream again by a predetermined distance by the drive unit, and then is temporarily stopped again. In this state, the movable base 272 is lowered again and processing at each position is continuously performed. In this way, the adhesively-laminated stator core 21 is manufactured by repeating the processing of vertically moving the movable base 272 during the temporary stop while intermittently feeding the strip-shaped steel sheet M by the drive unit.

An adhesively-laminated core manufacturing method using the adhesively-laminated core manufacturing device 200 having the above-described configuration will be described below with reference to FIG. 6.

As shown in FIG. 6, the adhesively-laminated core manufacturing method of the present embodiment includes a steel sheet feeding step S11, a curing accelerator application and drying step S12, a surplus portion wiping step S13, a processing oil application step S14, a first punching step S15, a second punching step S16, a third punching step S17, an adhesive application and adhesively-laminated stator core forming step S18, and a take-out step S19.

In the steel sheet feeding step S11, the strip-shaped steel sheet M is fed from a hoop material F toward the downstream side.

In the subsequent curing accelerator application and drying step S12, a curing accelerator a is applied from the nozzle 222 to the entire lower surface of the strip-shaped steel sheet M and dried to form a curing acceleration layer a'. The curing acceleration layer a' is a solid.

In the subsequent surplus portion wiping step S13, a surplus curing accelerator on the upper surface of the strip-shaped steel sheet M is wiped off. Therefore, the curing acceleration layer a' is not formed on the upper surface of the strip-shaped steel sheet M.

In the processing oil application step S14, a pressing oil b is applied to the upper and lower surfaces of the strip-shaped steel sheet M by the application roller 231 to form a layer. At this time, since the curing acceleration layer a' has been dried in advance, a concentration thereof is not lowered by being mixed with the pressing oil b and maintains substantially its original state.

In the subsequent first punching step S15, first punching of the strip-shaped steel sheet M is performed by the first stage punching part 241. At this time, since the pressing oil b has been applied to the strip-shaped steel sheet M in advance, a problem in press processing such as seizure or the like between the male die 241a and the female die 241b does not occur.

In the subsequent second punching step S16, second punching of the strip-shaped steel sheet M is performed by the second stage punching part 242. Also at this time, since the pressing oil b has been applied to the strip-shaped steel sheet M in advance, a problem in press processing such as seizure or the like between the male die 242a and the female die 242b does not occur.

In the subsequent third punching step S17, third punching of the strip-shaped steel sheet M is performed by the third stage punching part 243. Also at this time, since the pressing oil b has been applied to the strip-shaped steel sheet M in advance, a problem in press processing such as seizure or the like between the male die 243a and the female die 243b does not occur.

Through the first punching step S15 to the third punching step S17 described above, the core back part 22 and the tooth parts 23 illustrated in FIG. 1 are formed in the strip-shaped steel sheet M except for an outer shape portion.

In the subsequent adhesive application and adhesively-laminated stator core forming step S18, the electrical steel sheet 40 whose outer shape has been punched out of the strip-shaped steel sheet M by the outer shape punching male die 261 is laminated on an upper surface of another electrical steel sheet 40 that has been previously punched out. At this time, an adhesive c has been applied on the upper surface of the another electrical steel sheet 40 via the pressing oil b. Also, on the lower surface of the electrical steel sheet 40 laminated thereon, the curing acceleration layer a' coated with pressing oil b is formed. These electrical steel sheets 40 are heated in a state of being laminated and pressurized. Then, the adhesive c on the upper surface of the another electrical steel sheet 40 that has been subjected to outer shape punching previous time pushes away the pressing oil b on the lower surface side of the electrical steel sheet 40 that has been subjected to outer shape punching this time and mixes with the curing acceleration layer a' on an upper side of the pressing oil b, and thereby the adhesive c is instantly cured.

On the other hand, at the same time as the electrical steel sheet 40 that has been subjected to the outer shape punching this time is laminated on the another electrical steel sheet 40, the adhesive c is applied from the nozzle 253 onto the upper surface of the electrical steel sheet 40 on which the outer shape punching is performed this time via the pressing oil b. Since this adhesive c is on the upper surface side of the electrical steel sheet 40 and has not yet been mixed with the curing acceleration layer a', it is in a liquid state.

When the above-described steps are sequentially repeated, the required number of electrical steel sheets 40 are laminated and adhered, and thereby the adhesively-laminated stator core 21 is completed. Specifically, the steps from the steel sheet feeding step S11 to the adhesively-laminated stator core forming step S18 are sequentially repeated until the number of laminated electrical steel sheets 40 reaches a predetermined number. Then, when the number of laminated electrical steel sheets 40 reaches the predetermined number after the adhesively-laminated stator core forming step S18, the processing proceeds to the take-out step S19 without returning to the steel sheet feeding step S11.

In the subsequent take-out step S19, the completed adhesively-laminated stator core 21 is taken out from the outer shape punching female die 262, and thereby the entire steps of the adhesively-laminated core manufacturing method end.

The gist of the adhesively-laminated core manufacturing method using the adhesively-laminated core manufacturing device 200 described above is basically the same as that described in the first embodiment, and a vertical relationship between a laminated structure of the electrical steel sheet 40 shown in the adhesively-laminated stator core forming step S8 in FIG. 4 and a laminated structure of the electrical steel sheet 40 shown in the adhesive application and adhesively-laminated stator core forming step S18 in FIG. 6 is inverted upside down. Then, in the adhesively-laminated core manufacturing device 200 of the present embodiment that realizes these steps, the curing acceleration portion forming part 220 is disposed below the strip-shaped steel sheet M, and the adhesive application part 250 is disposed above the strip-shaped steel sheet M. That is, in the present embodiment, a formation position of the curing acceleration layer a' and an application position of the adhesive c with respect to the strip-shaped steel sheet M are inverted upside down from those in the first embodiment.

Also in the case of the present embodiment, since the curing acceleration layer a' provided on the strip-shaped steel sheet M is formed to be dried in advance, its mixing with the pressing oil b to be applied in a post step is curbed. Therefore, when the electrical steel sheets 40 are laminated and adhered together, since the curing acceleration layer a' can be mixed with the adhesive c while maintaining the same high concentration as the original, a high adhesive strength can be exhibited in an early stage. Therefore, higher productivity can be obtained while securing a sufficient adhesive strength.

Further, also in the case of the present embodiment, application of the pressing oil b is not limited to both surfaces of the strip-shaped steel sheet M, and may be applied to only one surface on which the curing acceleration layer a' is formed. Similarly, application of the curing accelerator a is not limited to one surface of the strip-shaped steel sheet M, and may be applied to both surfaces. Also, the application of the curing accelerator a is not limited to the application over the entire surface of the strip-shaped steel sheet M, and may be applied in a dot shape. However, in this case, in order for the dot-shaped adhesive c and the dot-shaped curing acceleration layer (curing acceleration portion) a' to be correctly overlapped and mixed with the adhesive application and adhesively-laminated stator core forming step S18, it is necessary to correctly adjust a relative positional relationship with the adhesive c applied in the previous step.

### [Third embodiment]

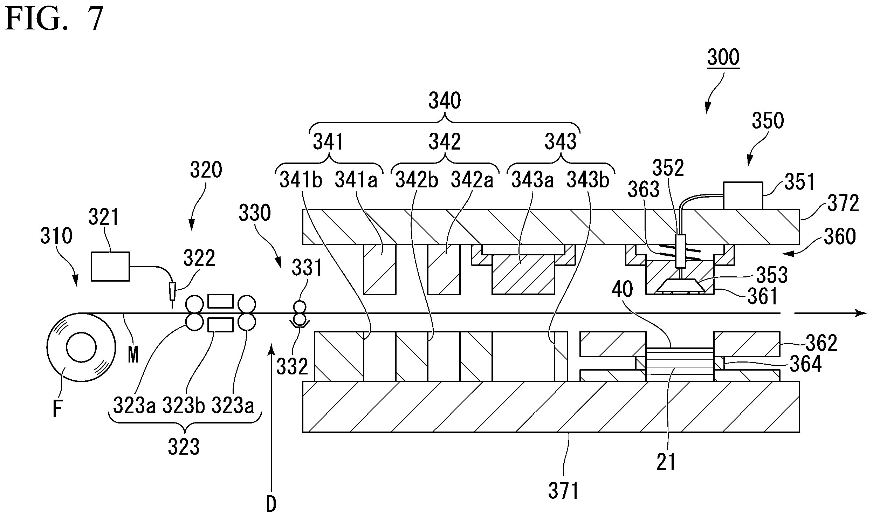

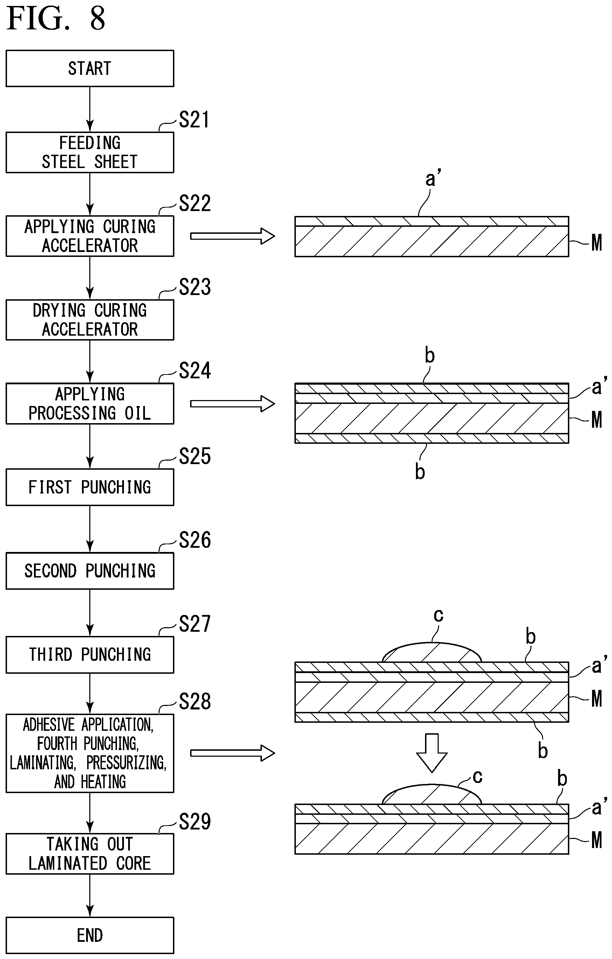

A third embodiment of the present invention will be described below with reference to FIGS. 7 and 8. FIG. 7 is a side view of an adhesively-laminated core manufacturing device according to the present embodiment. Also, FIG. 8 is a flowchart for explaining an adhesively-laminated core manufacturing method according to the present embodiment.

As illustrated in FIG. 7, an adhesively-laminated core manufacturing device 300 of the present embodiment includes a strip-shaped steel sheet supply part 310, a curing acceleration portion forming part 320, a drive unit (not illustrated), a pressing oil application part 330, a pressing part 340, an adhesive application part 350, and an adhesively-laminating part 360. Of these, a combination of the pressing part 340, the adhesive application part 350, and the adhesively-laminating part 360 constitutes a progressive die.

A hoop material F wound with a strip-shaped steel sheet M, which is a material of an electrical steel sheet (steel sheet part) 40, is pivotally supported by the strip-shaped steel sheet supply part 310, and feeds the strip-shaped steel sheet M toward the right side as viewed in FIG. 7. In the following description, the right side as viewed in FIG. 7, which is a direction in which the strip-shaped steel sheet M is fed, may be referred to as a downstream side (or downstream direction), and the left side as viewed in FIG. 7, which is an opposite direction thereto, may be referred to as an upstream side (or upstream direction). The strip-shaped steel sheet M fed toward the downstream side from the strip-shaped steel sheet supply part 310 is a steel sheet having the above-described chemical composition, and both surfaces thereof are coated with the above-described insulation coating.

The curing acceleration portion forming part 320 includes a curing accelerator tank 321, a nozzle 322 and a dryer 323.

A curing accelerator is stored in the curing accelerator tank 321. As a curing accelerator of this, one exemplified in the first embodiment can be used. The curing accelerator promotes instant curing of the adhesive by being mixed with an anaerobic adhesive or a 2-cyanoacrylate-based adhesive.

The nozzle 322 is connected to the curing accelerator tank 321. The nozzle 322 has a nozzle port facing an upper surface of the strip-shaped steel sheet M and applies an appropriate amount of the curing accelerator in the curing accelerator tank 321 to the upper surface. The curing accelerator is applied so that the entire surface of the upper surface is coated in the present embodiment, but the present invention is not limited to this form, and the curing accelerator may be configured to be partially applied, for example, in a dot shape or the like.

The dryer 323 includes a pair of rollers 323a and a dryer 323b.

The pair of rollers 323a are disposed downstream of the nozzle 322. The pair of rollers 323a hold the strip-shaped steel sheet M passing therebetween to be always kept horizontal.

The dryer 323b is disposed at a position sandwiched between the pair of rollers 323a. The dryer 323b dries the curing accelerator by blowing air onto the upper and lower surfaces of the strip-shaped steel sheet M. Thereby, when the strip-shaped steel sheet M has passed upstream one of the pair of rollers 323a, the curing accelerator begins to be dried by being blown with air, and then drying is completed before the strip-shaped steel sheet M reaches downstream one of the pair of rollers 323a. Therefore, on the upper surface of the strip-shaped steel sheet M after passing through the downstream one of the pair of rollers 323a, a curing acceleration layer (curing acceleration portion) in which the curing accelerator is dried is formed over the entire surface with a uniform thickness. An example of the thickness of the curing acceleration layer is 0.1 µm. Further, as for a degree of dryness of the curing acceleration layer (curing accelerator), drying a solvent thereof until it is completely volatilized is most preferable, but in addition to this, the term "drying" also includes a case in which the curing acceleration layer is formed of the curing accelerator dried to such an extent that it will not mix with a pressing oil.

As described above, as a means for quantitatively examining a degree of dryness of the curing acceleration layer, it can be determined by detecting an amount of an active component of the curing accelerator contained in the pressing oil after the pressing oil is applied to the curing acceleration portion.

Further, since the curing accelerator is not applied to the lower surface of the strip-shaped steel sheet M, the insulation coating remains in an exposed state.

The drive unit is disposed at a position D between the curing acceleration portion forming part 320 and the pressing oil application part 330. The drive unit intermittently feeds the strip-shaped steel sheet M from the curing acceleration portion forming part 320 in a rightward direction toward the pressing oil application part 330 as viewed in the drawing. Further, the curing acceleration layer in which the curing accelerator has been dried is already formed on the upper surface of the strip-shaped steel sheet M fed from the curing acceleration portion forming part 320 before reaching the drive unit. On the other hand, the lower surface of the strip-shaped steel sheet M before reaching the drive unit does not have the curing acceleration layer as described above, and the insulation coating remains in an exposed state.

The pressing oil application part 330 includes an application roller 331 and an oil pan 332.

The oil pan 332 is disposed below the application roller 331 and stores a pressing oil. The application roller 331 is a pair of rollers that hold the strip-shaped steel sheet M to be vertically sandwiched therebetween, and is in contact with the upper surface and the lower surface of the strip-shaped steel sheet M to send the strip-shaped steel sheet M downstream while applying the pressing oil. When the pressing oil is applied by the pressing oil application part 330, since the dried curing acceleration layer has been formed on the upper surface of the strip-shaped steel sheet M, a pressing oil layer is formed over the entire surface of the curing acceleration layer without being mixed. That is, the surface of the curing acceleration layer is coated with the pressing oil layer without gaps. At the same time, the pressing oil layer is also formed over the entire lower surface (insulation coating) of the strip-shaped steel sheet M.

The pressing part 340 is a progressive die including a first stage punching part 341, a second stage punching part 342, and a third stage punching part 343.

The first stage punching part 341 is disposed downstream of the pressing oil application part 330 and includes a male die 341a and a female die 341b. The male die 341a and the female die 341b are disposed coaxially in a vertical direction, and the strip-shaped steel sheet M is inserted therebetween. Therefore, the male die 341a faces the upper surface of the strip-shaped steel sheet M, and the female die 341b faces the lower surface of the strip-shaped steel sheet M. Then, in a state in which feeding of the strip-shaped steel sheet M is temporarily stopped, first punching processing required to form the electrical steel sheet 40 out of the strip-shaped steel sheet M is performed by moving the male die 341a downward into the female die 341b using a hydraulic mechanism (not illustrated). At this time, since the pressing oil has been applied to the upper and lower surfaces of the strip-shaped steel sheet M, punching can be performed without causing seizure or the like.

Furthermore, since the surface of the curing acceleration layer is coated with the pressing oil, the curing acceleration layer adhering to the male die 341a and the female die 341b can be curbed. Therefore, since a likelihood of the curing acceleration layer peeling off and being deposited on the male die 341a and the female die 341b can be suppressed, deterioration in structural strength and magnetic characteristics of the adhesively-laminated stator core 21 to be manufactured thereafter can be suppressed.

After the strip-shaped steel sheet M has been subjected to the punching processing, the male die 341a is moved upward to be pulled out of the female die 341b, and the strip-shaped steel sheet M is fed downstream again.

The second stage punching part 342 is disposed downstream of the first stage punching part 341 and includes a male die 342a and a female die 342b. The male die 342a and the female die 342b are disposed coaxially in the vertical direction, and the strip-shaped steel sheet M after finishing the first punching processing is inserted therebetween. Therefore, the male die 342a faces the upper surface of the strip-shaped steel sheet M, and the female die 342b faces the lower surface of the strip-shaped steel sheet M. Then, in a state in which feeding of the strip-shaped steel sheet M is temporarily stopped again, second punching processing required to form the electrical steel sheet 40 out of the strip-shaped steel sheet M is performed by moving the male die 342a downward into the female die 342b using the hydraulic mechanism (not illustrated). Also at this time, since the pressing oil has been applied to the upper and lower surfaces of the strip-shaped steel sheet M, punching can be performed without causing seizure or the like.

Also at this time, since the surface of the curing acceleration layer has been coated with the pressing oil, the curing acceleration layer adhering to the male die 342a and the female die 342b can be curbed. Therefore, since a likelihood of the curing acceleration layer peeling off and being deposited on the male die 342a and the female die 342b can be suppressed, deterioration in structural strength and magnetic characteristics of the adhesively-laminated stator core 21 to be manufactured thereafter can be suppressed.

After the strip-shaped steel sheet M has been subjected to the punching processing, the male die 342a is moved upward to be pulled out of the female die 342b, and the strip-shaped steel sheet M is fed downstream again.

The third stage punching part 343 is disposed downstream of the second stage punching part 342 and includes a male die 343a and a female die 343b. The male die 343a and the female die 343b are disposed coaxially in the vertical direction, and the strip-shaped steel sheet M after finishing the second punching processing is inserted therebetween. Therefore, the male die 343a faces the upper surface of the strip-shaped steel sheet M, and the female die 343b faces the lower surface of the strip-shaped steel sheet M. Then, in a state in which feeding of the strip-shaped steel sheet M is temporarily stopped again, third punching processing required to form the electrical steel sheet 40 out of the strip-shaped steel sheet M is performed by moving the male die 343a downward into the female die 343b using the hydraulic mechanism (not illustrated). Also at this time, since the pressing oil has been applied to the upper and lower surfaces of the strip-shaped steel sheet M, punching can be performed without causing seizure or the like. After this punching processing, the male die 343a is moved upward to be pulled out of the female die 343b, and the strip-shaped steel sheet M is fed downstream again.

The adhesive application part 350 is incorporated in the adhesively-laminating part 360 on a downstream side of the pressing part 340. The adhesive application part 350 includes an air pressure-feeder 351, a syringe 352 and a nozzle 353.

The syringe 352 is a container that stores an adhesive and is connected between the air pressure-feeder 351 and the nozzle 353 via a pipe. As the adhesive, one described in the first embodiment can be used.

The nozzle 353 is disposed above the strip-shaped steel sheet M. Therefore, a discharge port of the nozzle 353 faces the upper surface of the strip-shaped steel sheet M.

The adhesively-laminating part 360 is disposed downstream of the pressing part 340 and at the same position as the adhesive application part 350. The adhesively-laminating part 360 includes an outer shape punching male die 361, an outer shape punching female die 362, a spring 363, and a heater 364.

The outer shape punching male die 361 is a columnar die having a circular bottom surface, and has an upper end connected to a lower end of the spring 363. Then, the outer shape punching male die 361 is vertically movable together with the spring 363 in a state of being supported by the spring 363. The outer shape punching male die 361 has an outer diameter dimension substantially the same as an outer diameter dimension of the adhesively-laminated stator core 21. The nozzle 353 is incorporated in the outer shape punching male die 361. Then, the discharge port of the nozzle 353 is formed on the bottom surface of the outer shape punching male die 361.

The outer shape punching female die 362 is a die having a columnar internal space, and has an inner diameter dimension substantially the same as an outer diameter dimension of the adhesively-laminated stator core 21.

The heater 364 is integrally incorporated in the outer shape punching female die 362. The heater 364 heats the electrical steel sheets (steel sheet parts) 40 laminated in the outer shape punching female die 362 from its periphery. When the adhesive used is a thermosetting type, the adhesive is cured by receiving heat from the heater 364. On the other hand, when the adhesive used is a room temperature curing type, the adhesive is cured at room temperature without needing heating.

According to the adhesively-laminating part 360, in a state in which feeding of the strip-shaped steel sheet M is temporarily stopped, the outer shape punching male die 361 is lowered to sandwich the strip-shaped steel sheet M between itself and the outer shape punching female die 362, the outer shape punching male die 361 is further pushed into the outer shape punching female die 362, and thereby the electrical steel sheet 40 that has been subjected to the outer shape punching from the strip-shaped steel sheet M can be obtained.

Also at this time, since the surface of the curing acceleration layer has been coated with the pressing oil, the curing acceleration layer adhering to the outer shape punching male die 361 and the outer shape punching female die 362 can be curbed. Therefore, since a likelihood of the curing acceleration layer peeling off and being deposited on the outer shape punching male die 361 and the outer shape punching female die 362 can be suppressed, deterioration in structural strength and magnetic characteristics of the adhesively-laminated stator core 21 to be manufactured thereafter can be suppressed.

Further, when the outer shape punching is performed by the outer shape punching male die 361, if the air pressure-feeder 351 is started to pressure-feed an appropriate amount of air to the syringe 352, the adhesive in the syringe 352 is fed to the nozzle 353. As a result, an appropriate amount of the adhesive is discharged from the discharge port formed in the bottom surface of the outer shape punching male die 361 and is applied to the upper surface of the strip-shaped steel sheet M. More specifically, the adhesive is applied onto the pressing oil that is coated on the entire surface of the curing acceleration layer formed on the upper surface of the strip-shaped steel sheet M. Although the adhesive is applied on an upper side of the curing acceleration layer, since the pressing oil is interposed therebetween, curing of the adhesive does not start at this point of time. Further, the adhesive applied here is used for adhering another electrical steel sheet 40 to be subjected to outer shape punching and laminated next.

The electrical steel sheet 40 that has been subjected to outer shape punching this time is laminated on an upper surface of another electrical steel sheet 40 that has been punched out previous time and adhesively laminated in the outer shape punching female die 362. Due to the lamination, the adhesive and the curing acceleration layer formed on the upper surface of the another electrical steel sheet 40 previous time push away the pressing oil on the same upper surface and mix with each other. Further, a pressing force from the outer shape punching male die 361 and heating from the heater 364 are applied to the laminated electrical steel sheets 40. At this time, the pressing force applied to the electrical steel sheets 40 from the outer shape punching male die 361 is always kept constant by a biasing force of the spring 363.

As described above, the electrical steel sheet 40 punched out this time is adhesively fixed to an upper surface of the electrical steel sheet 40 that has been punched out previous time. On the other hand, since the adhesive applied to the upper surface of the electrical steel sheet 40 punched out this time has not yet been mixed with the curing acceleration layer on the same upper surface at this point of time, the adhesive remains in a liquid state without curing.

When such steps of the outer shape punching, pressurizing, and heating described above are repeated as many times as the number of electrical steel sheets 40 to be laminated, the adhesively-laminated stator core 21 is formed in the outer shape punching female die 262.

As illustrated in FIG. 7, the female die 341b, the female die 342b, the female die 343b, the outer shape punching female die 362, and the heater 364 are fixed on a common fixed base 371. Accordingly, relative positions of the female die 341b, the female die 342b, the female die 343b, the outer shape punching female die 362, and the heater 364 in horizontal and vertical directions are fixed.

Similarly, the male die 341a, the male die 342a, the nozzle 353, and the outer shape punching male die 361 are also fixed to a lower surface of a common movable base 372. Accordingly, relative positions of the male die 341a, the male die 342a, the nozzle 353, and the outer shape punching male die 361 in the horizontal and vertical directions are fixed.

When the drive unit feeds the strip-shaped steel sheet M toward the downstream side, and the movable base 372 is lowered during the temporary stop, the outer shape punching, lamination, and adhesion of the electrical steel sheet 40 and the adhesive application for the next step, the third punching processing to a position of the strip-shaped steel sheet M to be subjected to the outer shape punching next, the second punching processing to a position of the strip-shaped steel sheet M to be subjected to the third punching processing next, and the first punching processing to a position of the strip-shaped steel sheet M to be subjected to the second punching processing next are performed at the same time.

Next, after the movable base 372 is raised and retreated above the strip-shaped steel sheet M, the strip-shaped steel sheet M is fed downstream again by a predetermined distance by the drive unit, and then is temporarily stopped again. In this state, the movable base 372 is lowered again and processing at each position is continuously performed. In this way, the adhesively-laminated stator core 21 is manufactured by repeating the processing of vertically moving the movable base 372 during the temporary stop while intermittently feeding the strip-shaped steel sheet M by the drive unit.

An adhesively-laminated core manufacturing method using the adhesively-laminated core manufacturing device 300 having the above-described configuration will be described below with reference to FIG. 8.

As shown in FIG. 8, the adhesively-laminated core manufacturing method of the present embodiment includes a steel sheet feeding step S21, a curing accelerator application step S22, a curing accelerator drying step S23, a processing oil application step S24, a first punching step S25, a second punching step S26, a third punching step S27, an adhesive application and adhesively-laminated stator core forming step S28, and a take-out step S29.

In the steel sheet feeding step S21, the strip-shaped steel sheet M is fed from a hoop material F toward the downstream side.

In the subsequent curing accelerator application step S22, a curing accelerator a is applied from the nozzle 322 to the entire upper surface of the strip-shaped steel sheet M. The curing accelerator a at this point of time is in a liquid state.

In the subsequent curing accelerator drying step S23, air from the dryer 323b is blown onto the upper and lower surfaces of the strip-shaped steel sheet M to dry the curing accelerator a that has been in a liquid state, and thereby a curing acceleration layer (curing acceleration portion) a' is formed. This curing acceleration layer a' is solid.

In the processing oil application step S24, a pressing oil b is applied to the upper and lower surfaces of the strip-shaped steel sheet M by the application roller 331 to form a layer. At this time, since the curing acceleration layer a' has been dried in advance, a concentration thereof is not lowered by being mixed with the pressing oil b and maintains substantially its original state.

In the subsequent first punching step S25, first punching of the strip-shaped steel sheet M is performed by the first stage punching part 341. At this time, since the pressing oil b has been applied to the strip-shaped steel sheet M in advance, a problem in press processing such as seizure or the like between the male die 341a and the female die 341b does not occur.

In the subsequent second punching step S26, second punching of the strip-shaped steel sheet M is performed by the second stage punching part 342. Also at this time, since the pressing oil b has been applied to the strip-shaped steel sheet M in advance, a problem in press processing such as seizure or the like between the male die 342a and the female die 342b does not occur.

In the subsequent third punching step S27, third punching of the strip-shaped steel sheet M is performed by the third stage punching part 343. Also at this time, since the pressing oil b has been applied to the strip-shaped steel sheet M in advance, a problem in press processing such as seizure or the like between the male die 343a and the female die 343b does not occur.

Through the first punching step S25 to the third punching step S27 described above, the core back part 22 and the tooth parts 23 illustrated in FIG. 1 are formed in the strip-shaped steel sheet M except for an outer shape portion.

In the subsequent adhesive application and adhesively-laminated stator core forming step S28, the electrical steel sheet 40 whose outer shape has been punched out of the strip-shaped steel sheet M by the outer shape punching male die 361 is laminated on an upper surface of another electrical steel sheet 40 that has been previously punched out. At this time, the curing acceleration layer a' is formed on the upper surface of the another electrical steel sheet 40, and an adhesive c is further applied thereon via the pressing oil b. Therefore, when these electrical steel sheets 40 are laminated and pressurized, the pressing oil b on the upper surface of the another electrical steel sheet 40 is pushed away, the curing acceleration layer a' and the adhesive c on the same upper surface are mixed and further heated by the heater 364, and thereby the adhesive c is instantly cured.

On the other hand, at the same time as the electrical steel sheet 40 that has been subjected to the outer shape punching this time is laminated on the another electrical steel sheet 40, the adhesive c is applied from the nozzle 353 onto the upper surface of the electrical steel sheet 40 on which the outer shape punching is performed this time. Since this adhesive c is on the upper surface of the electrical steel sheet 40 and has not yet been mixed with the curing acceleration layer a', it is in a liquid state.

When the above-described steps are sequentially repeated, the required number of electrical steel sheets 40 are laminated and adhered, and thereby the adhesively-laminated stator core 21 is completed. Specifically, the steps from the steel sheet feeding step S21 to the adhesively-laminated stator core forming step S28 are sequentially repeated until the number of laminated electrical steel sheets 40 reaches a predetermined number. Then, when the number of laminated electrical steel sheets 40 reaches the predetermined number after the adhesively-laminated stator core forming step S28, the processing proceeds to the take-out step S29 without returning to the steel sheet feeding step S21.

In the subsequent take-out step S29, the completed adhesively-laminated stator core 21 is taken out from the outer shape punching female die 362, and thereby the entire steps of the adhesively-laminated core manufacturing method end.

The gist of the adhesively-laminated core manufacturing method using the adhesively-laminated core manufacturing device 200 described above is basically the same as that described in the second embodiment, and is different in that a position of forming the curing acceleration layer a' is changed from the lower surface to the upper surface of the electrical steel sheet 40. Thus, in the adhesively-laminated core manufacturing device 300 of the present embodiment that realizes these steps, the curing acceleration portion forming part 220 is disposed above the strip-shaped steel sheet M.

That is, each electrical steel sheet 40 includes an electrical steel sheet (first steel sheet part) 40 punched out first, and an electrical steel sheet (second steel sheet part) 40 punched out later. Then, the adhesively-laminated core manufacturing method of the present embodiment includes performing a step (fourth step) of punching first and preparing the electrical steel sheet 40 having an upper surface (first surface), the curing acceleration layer (curing acceleration portion) a' formed on the upper surface, the pressing oil b disposed on the curing acceleration layer a', and the adhesive c disposed on the pressing oil b, a step (fifth step) of subsequently punching and preparing the electrical steel sheet 40 having a lower surface (second surface), and a step (sixth step) of overlapping and adhering the electrical steel sheet 40 punched later and the electrical steel sheet 40 punched first so that the above-described upper surface and the above-described lower surface face each other.

Also in the case of the present embodiment, since the curing acceleration layer a' provided on the strip-shaped steel sheet M is formed to be dried in advance, its mixing with the pressing oil b to be applied in a post step is curbed. Therefore, when the electrical steel sheets 40 are laminated and adhered together, since the curing acceleration layer a' can be mixed with the adhesive c while maintaining the same high concentration as the original, a high adhesive strength can be exhibited in an early stage. Therefore, higher productivity can be obtained while securing a sufficient adhesive strength.

Further, also in the case of the present embodiment, application of the pressing oil b is not limited to both surfaces of the strip-shaped steel sheet M, and may be applied to only one surface on which the curing acceleration layer a' is formed. However, in a case of one surface application, it is necessary to apply the pressing oil b to be sandwiched between the curing acceleration layer a' and the adhesive c.

Also, the application of the curing accelerator a is not limited to the application over the entire surface of the strip-shaped steel sheet M, and may be applied in a dot shape. However, in this case, as in the other embodiments, in order for the dot-shaped adhesive c and the dot-shaped curing acceleration layer (curing acceleration portion) a' to be correctly overlapped and mixed with the adhesive application and adhesively-laminated stator core forming step S28, it is necessary to correctly adjust a relative positional relationship with the adhesive c applied in the previous step.

### [Fourth embodiment]

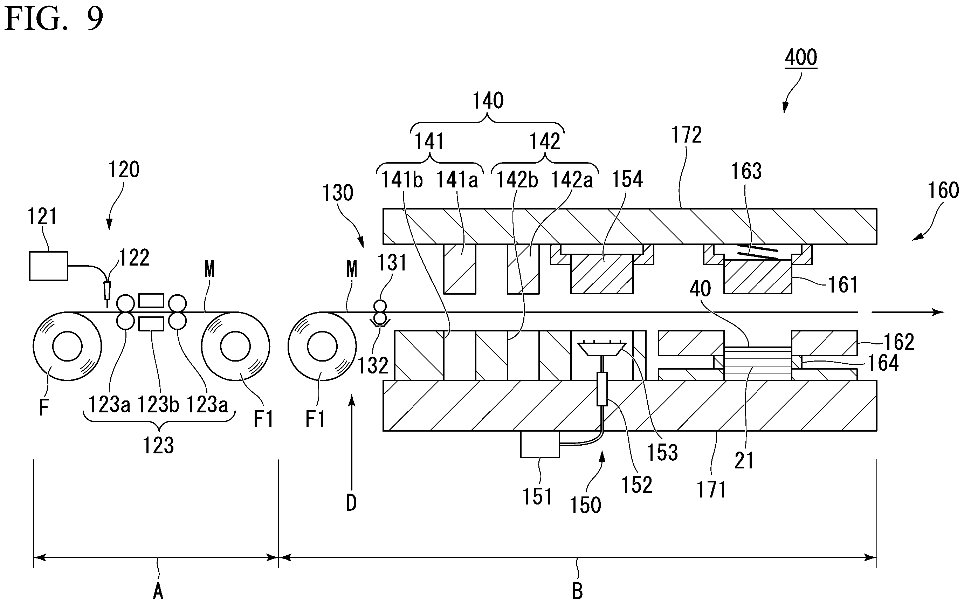

A fourth embodiment of the present invention will be described below with reference to FIG. 9. FIG. 9 is a side view of an adhesively-laminated core manufacturing device according to the present embodiment.

The present embodiment corresponds to a modified example in which only one point is changed from the first embodiment described with reference to FIGS. 3 and 4, and thus in the following description, configurations the same as those in the above-described first embodiment are denoted by the same reference signs, and detailed description thereof will be omitted.

An adhesively-laminated core manufacturing device 400 of the present embodiment includes a first stage A having the curing acceleration portion forming part 120 described above, and a second stage B having a conveying unit for feeding a strip-shaped steel sheet M transferred from the first stage A toward a pressing oil application part 130. In the second stage B, the conveying unit, the pressing oil application part 130, a pressing part 140, an adhesive application part 150, and the adhesively-laminating part 160 are disposed to be aligned in that order in a direction in which the strip-shaped steel sheet M is fed. Of these, a combination of the pressing part 140, the adhesive application part 150, and the adhesively-laminating part 160 constitutes a progressive die.

The first stage A includes the conveying unit that feeds a hoop material F, the curing acceleration portion forming part 120, and a winding part for winding the strip-shaped steel sheet M after forming the curing acceleration layer to form a hoop material F1. The hoop material F1, which is an intermediate material manufactured in the first stage A, is removed from the winding part of the stage A and moved to another place. When this is performed a plurality of times, a plurality of hoop materials F1 can be prepared beforehand.

The second stage B includes another conveying unit and the drive unit (not illustrated) configured to receive the hoop material F1 that has been prepared beforehand and feeds it toward the pressing oil application part 130, the pressing oil application part 130, the pressing part 140, the adhesive application part 150, and the adhesively-laminating part 160. The strip-shaped steel sheet M fed from the another conveying unit is fed toward the pressing oil application part 130 by the drive unit.

Further, the curing acceleration layer (curing accelerator) in the first stage A is preferably dried until a solvent thereof is completely volatilized, but may have a degree of dryness to such an extent that it does not mix with the pressing oil and does not cause any inconvenience when the strip-shaped steel sheet M is pulled out from the hoop material F1 and used.

Also in the adhesively-laminated core manufacturing method using the adhesively-laminated core manufacturing device 400 described above, the same operation and effects as those of the above-described first embodiment can be obtained.

Also, although not illustrated, as another modified example of the first embodiment described above, the adhesive c may be applied to both an upper surface of the electrical steel sheet 40 on which lamination is to be performed and a lower surface of the electrical steel sheet 40 to be laminated from now.

In the adhesively-laminated core manufacturing method in this case, first, a step (seventh step) of preparing an electrical steel sheet (first steel sheet part) 40 punched first is performed. In this step, the electrical steel sheet (first steel sheet part) 40 including an upper surface (first surface), the curing acceleration layer (curing acceleration portion) a' formed on the upper surface, the pressing oil b applied and disposed on the curing acceleration layer a', and the adhesive c applied and disposed on the pressing oil b is prepared.

Next, a step (eighth step) of preparing an electrical steel sheet (second steel sheet part) 40 punched later is first performed. In this step, the electrical steel sheet (second steel sheet part) 40 including a lower surface (second surface) and the adhesive c applied and disposed on the lower surface is prepared.

Then, as a final step (ninth step), the electrical steel sheets 40 punched first and the electrical steel sheets 40 punched later are overlapped and adhered so that the first surface and the second surface face each other.

When each of the steps described above is repeated, the adhesively-laminated stator core 21 is manufactured.

Embodiments of the present invention have been described above. However, the technical scope of the present invention is not limited to the above-described embodiments and examples, and various changes can be made within a range not departing from the scope of the present invention.

For example, a shape of the adhesively-laminated stator core 21 is not limited only to the forms illustrated in the embodiments. Specifically, dimensions of the outer diameter and inner diameter, a laminated thickness, and the number of slots of the adhesively-laminated stator core 21, a dimensional ratio of the tooth parts 23 in a circumferential direction and a radial direction, a dimensional ratio in the radial direction between the tooth parts 23 and the core back part 22, or the like can be arbitrarily designed according to desired characteristics of the rotary electric machine.

In the rotor 30 of the above-described embodiments, a set of two permanent magnets 32 forms one magnetic pole, but a manufacturing object of the present invention is not limited only to the form. For example, one permanent magnet 32 may form one magnetic pole, or three or more permanent magnets 32 may form one magnetic pole.

In each of the embodiments, the permanent magnet motor has been described as an example of the rotary electric machine 10, but a structure of the rotary electric machine 10 is not limited only thereto as will be illustrated below, and furthermore, various known structures not illustrated below can also be employed.

In each of the embodiments, the permanent magnet motor has been described as an example of the rotary electric machine 10, but the present invention is not limited only thereto. For example, the rotary electric machine 10 may be a reluctance motor or an electromagnet field motor (wound-field motor).

In each of the embodiments, the synchronous motor has been described as an example of the AC motor, but the present invention is not limited thereto. For example, the rotary electric machine 10 may be an induction motor.

In each of the embodiments, the AC motor has been described as an example of the rotary electric machine 10, but the present invention is not limited thereto. For example, the rotary electric machine 10 may be a DC motor.

In each of the embodiments, the motor has been described as an example of the rotary electric machine 10, but the present invention is not limited thereto. For example, the rotary electric machine 10 may be a generator.

In addition, the components in the above-described embodiments can be appropriately replaced with well-known components within a range not departing from the meaning of the present invention, and the modified examples described above may be appropriately combined.

### [Industrial Applicability]

According to the above-described aspects of the present invention, it is possible to provide an adhesively-laminated core manufacturing method and an adhesively-laminated core manufacturing device in which higher productivity can be obtained while securing a sufficient adhesive strength in manufacturing an adhesively-laminated core. Therefore, industrial applicability is high.

### [Brief Description of the Reference Symbols]

21 Adhesively-laminated stator core (adhesively-laminated core, stator for rotary electric machine)
40 Electrical steel sheet (steel sheet part, first steel sheet part, second steel sheet part)
100, 200, 300, 400 Adhesively-laminated core manufacturing device
120, 220, 320 Curing acceleration portion forming part
130, 230, 330 Pressing oil application part
140, 240, 340 Pressing part
150, 250, 350 Adhesive application part
A First stage
a Curing accelerator
a' Curing acceleration portion
B Second stage
b Pressing oil
c Adhesive
M Strip-shaped steel sheet

## Claims

1. An adhesively-laminated core manufacturing method which is a method for manufacturing an adhesively-laminated core by punching a plurality of steel sheet parts while a strip-shaped steel sheet is fed and laminating the steel sheet parts via an adhesive, the adhesively-laminated core manufacturing method comprising:
a step of forming a curing acceleration portion by applying and drying a curing accelerator on one or both surfaces of the strip-shaped steel sheet before a pressing oil is applied; and
a step of applying the pressing oil to a surface of the curing acceleration portion.

2. The adhesively-laminated core manufacturing method according to claim 1, wherein each of the steel sheet parts includes a first steel sheet part and a second steel sheet part, the adhesively-laminated core manufacturing method comprising:
a first step of preparing the first steel sheet part having a first surface, the curing acceleration portion formed on the first surface, and the pressing oil disposed on the surface of the curing acceleration portion;
a second step of preparing the second steel sheet part having a second surface and the adhesive disposed on the second surface; and
a third step of overlapping and adhering the first steel sheet part and the second steel sheet part so that the first surface and the second surface face each other.

3. The adhesively-laminated core manufacturing method according to claim 1, wherein each of the steel sheet parts includes a first steel sheet part and a second steel sheet part, the adhesively-laminated core manufacturing method comprising:
a fourth step of preparing the first steel sheet part having a first surface, the curing acceleration portion formed on the first surface, the pressing oil disposed on the surface of the curing acceleration portion, and the adhesive disposed on the pressing oil;
a fifth step of preparing the second steel sheet part having a second surface; and
a sixth step of overlapping and adhering the first steel sheet part and the second steel sheet part so that the first surface and the second surface face each other.

4. The adhesively-laminated core manufacturing method according to claim 1, wherein each of the steel sheet parts includes a first steel sheet part and a second steel sheet part, the adhesively-laminated core manufacturing method comprising:
a seventh step of preparing the first steel sheet part having a first surface, the curing acceleration portion formed on the first surface, the pressing oil disposed on the surface of the curing acceleration portion, and the adhesive disposed on the pressing oil;
an eighth step of preparing the second steel sheet part having a second surface and the adhesive disposed on the second surface; and
a ninth step of overlapping and adhering the first steel sheet part and the second steel sheet part so that the first surface and the second surface face each other.

5. The adhesively-laminated core manufacturing method according to any one of claims 1 to 4, wherein the adhesive is an anaerobic adhesive or a 2-cyanoacrylate-based adhesive.

6. The adhesively-laminated core manufacturing method according to claim 5, wherein a curing accelerator for the anaerobic adhesive contains an active component promoting anaerobic curing selected from titanium, chromium, manganese, iron, cobalt, nickel, copper, zinc, silver, vanadium, molybdenum, ruthenium, saccharin, and a combination thereof.

7. The adhesively-laminated core manufacturing method according to claim 5, wherein a curing accelerator for the 2-cyanoacrylate-based adhesive contains an active component promoting curing of the 2-cyanoacrylate-based adhesive selected from organic amines such as dimethylaniline, diethylamine, o-phenylenediamine, dimethylparatoluidine, diethylparatoluidine, and N,N-diethylaniline, acid amides such as trichloroacetamide, organic imides such as succinimide, quaternary ammonium salts such as tetramethylammonium chloride and benzyltrimethylammonium chloride, and a combination thereof.

8. The adhesively-laminated core manufacturing method according to claim 5, wherein a curing accelerator for the anaerobic adhesive or the 2-cyanoacrylate-based adhesive contains an active component promoting anaerobic curing or an active component promoting curing of the 2-cyanoacrylate-based adhesive diluted with a solvent such as a ketone-based solvent, an alcohol-based solvent, an ester-based solvent, a glycol ether-based solvent, a hydrocarbon-based solvent, a halogenated hydrocarbon-based solvent, an ether-based solvent, a glycol-based solvent, or an amine-based solvent.

9. The adhesively-laminated core manufacturing method according to any one of claims 1 to 8, wherein the adhesively-laminated core is a stator for a rotary electric machine.

10. An adhesively-laminated core manufacturing device which is a device for manufacturing an adhesively-laminated core by laminating a plurality of steel sheet parts punched out of a strip-shaped steel sheet via an adhesive while feeding the strip-shaped steel sheet, the adhesively-laminated core manufacturing device comprising:
a curing acceleration portion forming part forming a curing acceleration portion by applying and drying a curing accelerator on one or both surfaces of the strip-shaped steel sheet;
a pressing oil application part disposed downstream of the curing acceleration portion forming part and configured to apply a pressing oil to at least a surface of the curing acceleration portion;
a pressing part disposed downstream of the pressing oil application part and configured to apply press processing to the strip-shaped steel sheet; and
an adhesive application part applying the adhesive to the one surface of the strip-shaped steel sheet.

11. The adhesively-laminated core manufacturing device according to claim 10, wherein the curing acceleration portion forming part, the pressing oil application part, the pressing part, and the adhesive application part are aligned in that order in a direction in which the strip-shaped steel sheet is fed.

12. The adhesively-laminated core manufacturing device according to claim 10, comprising:
a first stage including the curing acceleration portion forming part; and
a second stage including a conveying unit for feeding the strip-shaped steel sheet transferred from the first stage toward the pressing oil application part, wherein
the second stage includes the conveying unit, the pressing oil application part, the pressing part, and the adhesive application part which are disposed to be aligned in that order in a direction in which the strip-shaped steel sheet is fed.

13. The adhesively-laminated core manufacturing device according to any one of claims 10 to 12, wherein the adhesive is an anaerobic adhesive or a 2-cyanoacrylate-based adhesive.

14. The adhesively-laminated core manufacturing device according to claim 13, wherein a curing accelerator for the anaerobic adhesive contains an active component promoting anaerobic curing selected from titanium, chromium, manganese, iron, cobalt, nickel, copper, zinc, silver, vanadium, molybdenum, ruthenium, saccharin, and a combination thereof.

15. The adhesively-laminated core manufacturing device according to claim 13, wherein a curing accelerator for the 2-cyanoacrylate-based adhesive contains an active component promoting curing of the 2-cyanoacrylate-based adhesive selected from organic amines such as dimethylaniline, diethylamine, o-phenylenediamine, dimethylparatoluidine, diethylparatoluidine, and N,N-diethylaniline, acid amides such as trichloroacetamide, organic imides such as succinimide, quaternary ammonium salts such as tetramethylammonium chloride and benzyltrimethylammonium chloride, and a combination thereof.

16. The adhesively-laminated core manufacturing device according to claim 13, wherein a curing accelerator for the anaerobic adhesive or the 2-cyanoacrylate-based adhesive contains an active component promoting anaerobic curing or an active component promoting curing of the 2-cyanoacrylate-based adhesive diluted with a solvent such as a ketone-based solvent, an alcohol-based solvent, an ester-based solvent, a glycol ether-based solvent, a hydrocarbon-based solvent, a halogenated hydrocarbon-based solvent, an ether-based solvent, a glycol-based solvent, or an amine-based solvent.

17. The adhesively-laminated core manufacturing device according to any one of claims 10 to 16, wherein the adhesively-laminated core is a stator for a rotary electric machine.
